# EUROPEAN PATENT SPECIFICATION

(11) **EP 0 688 351 B1**
(45) Date of publication and mention of the grant of the patent: **06.08.1997**
(21) Application number: 93907439.9
(22) Date of filing: 11.03.1993
(51) Int. Cl.: C09J 4/06, C09J 7/02

(54) **RADIATION CURABLE ACRYLATE/SILICONE PERMANENTLY REMOVABLE PRESSURE SENSITIVE ADHESIVE**
STRAHLENHAERTBARER, PERMANENT ENTFERNBARER ACRYLAT/SILIKON-HAFTKLEBER
ADHESIF AUTOCOLLANT A ACRYLATE/SILICONE, DECOLLABLE EN PERMANENCE, DURCISSABLE PAR RAYONNEMENT

(43) Date of publication of application: 27.12.1995
(73) Proprietor: MINNESOTA MINING AND MANUFACTURING COMPANY, St. Paul, Minnesota 55133-3427 (US)
(72) Inventor: MAZUREK, Mieczyslaw, H., Saint Paul, MN 55133-3427 (US); KANTNER, Steven, S., Saint Paul, MN 55133-3427 (US); JUNG, Dieter, Saint Paul, MN 55133-3427 (US); GRAICHEN, Andreas, H., Saint Paul, MN 55133-3427 (US)
(74) Representative: VOSSIUS & PARTNER
(86) International application number: US9302244
(87) International publication number: WO9420583

(56) References cited:
- EP-A- 0 250 093
- WO-A-92/16593
- US-A- 4 972 005
- US-A- 5 147 946

## Description

This invention relates to radiation cured vinyl-silicone permanently removable pressure sensitive adhesives (PSAs), to methods of their preparation, and to PSA coated sheet materials.

There are a number of situations where it is desirable to provide an adhesive which can be readily peeled off from the substrate to which it has been applied even after long term dwell. Such adhesives are required for use, for example, on masking tape, on removable labels, on bumper stickers, on medical tapes to prevent trauma to the skin, on poster mounting tapes, on protective films, etc. In such cases, conventionally employed adhesives have either had such low initial tack that the tapes or labels accidently fall off, or they have provided bonds which tend to become gradually stronger so that after some hours, days, or months, the tape can no longer be removed without delaminating either the tape or the substrate.

A variety of approaches involving crosslinked acrylate pressure sensitive adhesives (PSAs) are known to be useful in imparting such removability. Silver (U.S. Patent No. 3,691,140) discloses the use of inherently tacky non-silicone containing acrylate copolymeric microspheres which allow for easy removal from bonded paper without delamination. Delgado (U.S. Patent No. 5,045,569) discloses the use of hollow acrylate polymer microspheres having improved shear adhesion and peel adhesion and reduced adhesive transfer problems. Esmay (U.S. Patent No. 4,599,265) discloses a removable PSA tape wherein the PSA is an acrylate polymer which is nearly free from any polar copolymerizable monomer and is crosslinked by use of a photocrosslinker or a low molecular weight polyfunctional acrylic monomer. Kellen (U.S. Patent No. 4,737,559) discloses the use of a radiation crosslinked copolymer as a pressure sensitive skin adhesive in medical applications. The balance between the initial skin adhesion value and the 48 hour skin adhesion value is controlled by the amount of copolymerized photocrosslinker present and the radiation dose employed. None of these references teach the use of a coreactive multifunctional siloxane as a means of imparting permanent removability.

Incorporation of siloxanes into acrylate PSAs to modify adhesive performance is also known. Mazurek (U.S. Patent No. 4,693,935) discloses a PSA composition which comprises a copolymer which has pendant siloxane grafts (obtained by copolymerization of the monofunctional siloxane) resulting initially in a lower degree of adhesiveness allowing for positionability, but which builds with time to form a strong adhesive bond. Japanese Patent Publication No. 63-291969 (Nitto), published November 29, 1988, discloses a blend of silicone grafted copolymers with a non-silicone PSA to impart good removability stably without variation in time. Lee (U.S. Patent No. 4,994,538) discloses a PSA polymer, prepared by emulsion polymerization, containing about 0.1 to about 1.0 percent reactive silicone acrylate polymer having an acrylate functionality of at least about 2, which is initially repositionable but becomes permanent with age. Walker (U.S. Patent No. 4,716,194) discloses an acrylate based pressure sensitive emulsion adhesive containing an effective amount of low molecular weight organofunctional silane monomer (typically 0.01 to 0.5 percent by weight) to improve the removability of the adhesive. Blizzard (U.S. Patent No. 4,831,080) discloses a blend of PSA (typically non-acrylate) with curable liquid organohydrogensiloxane which results in improved adhesive bond strength over the unmodified PSA, which bond strength generally increases with time. Mazurek, Serial No. 07/672,342, assigned to the assignee of the present case, discloses radiation curable acrylate/silicone PSAs obtained from cocuring acrylic monomer and high molecular weight telechelic siloxane in the presence of MQ resin which tackifies the silicone phase resulting in improved adhesion to, for example, low energy surfaces over the unmodified PSA.

None of these references, however, teach the use of a coreactive multifunctional siloxane to impart permanent removability to a radiation cured acrylate pressure sensitive adhesive composition.

A need thus exists for an acrylate PSA that allows one to tailor initial adhesion levels over a broad range while minimizing the build in adhesion usually associated with long term dwell.

A need also exists for a PSA which eliminates the problems with adhesive transfer without the need for a separate binder material and which provides improved shear adhesion relative to known adhesives which possess permanent removability.

A need also exists for a PSA that can be reliably and controllably prepared by radiation curing and whose preparation reduces or eliminates solvent and thus the need for a drying step required by known adhesives. We have found such a PSA.

We have discovered a superior permanently removable acrylate PSA modified with a coreacted multifunctional siloxane which allows for wider variation in the level of adhesion and lower adhesive transfer than known systems. The superior silicone modified PSA is environmentally advantageous in that the amount of solvent employed in its preparation is drastically reduced or altogether eliminated which is also advantageous in terms of the reduction of potential health hazards sometimes associated with the use of such solvents. The PSA is also advantageous in that it can be prepared by radiation curing and that the need for a drying step is reduced or eliminated due to the solvent reduction or elimination. Furthermore, the permanently removable silicone modified PSA of the invention possesses balanced PSA properties tailorable over a wide range.

The present invention provides a radiation cured acrylate pressure sensitive adhesive composition modified with 1 to 10 weight percent of a coreacted multifunctional siloxane having an average of at least two free-radically polymerizable vinyl moieties per molecule, the siloxane represented by the formula 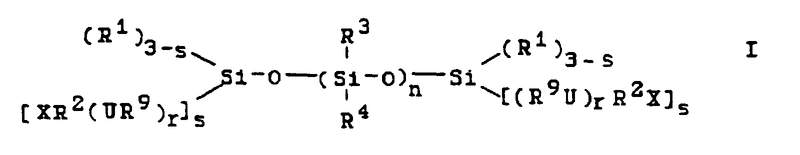 wherein
R¹ are monovalent moieties which can be the same or different selected from the group consisting of alkyl, substituted alkyl, aryl, and substituted aryl;
R² can independently be the same or different and are divalent linking groups;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups; and
wherein said radiation cured acrylate pressure sensitive adhesive composition has improved removability relative to the same composition cured without the coreactive multifunctional siloxane present.

The present invention further provides a first method of making a silicone modified cured PSA with improved permanent removability comprising the steps of:
(a) forming a homogeneous mixture comprising:
   (i) 1 to 10 weight percent of a coreactive multifunctional siloxane of Formula I;
   (ii) 65 to 99 weight percent of monofunctional free radically polymerizable vinyl monomer which is capable of copolymerizing with said siloxane, wherein said free radically polymerizable vinyl monomer is selected from the group consisting of acrylic acid, methacrylic acid, esters of acrylic acid comprising 4 to 21 carbon atoms, esters of methacrylic acid comprising 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof; and
   (iii) 0.1 to 5 weight percent of a photoinitiator;
   wherein the weight percentages are based upon the total weight of the homogeneous mixture; and
(b) polymerizing said homogeneous mixture by exposure of said homogeneous mixture to low intensity ultraviolet radiation in the absence of oxygen and solvent.

The present invention further provides a second method of making a silicone modified cured PSA with improved permanent removability comprising the steps of:
(a) forming a homogeneous mixture comprising:
   (i) 1 to 10 weight percent of coreactive multifunctional siloxane represented by the formula 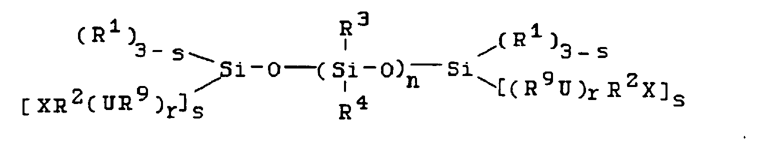 wherein
      R¹ are monovalent moieties which can be the same or different selected from the group consisting of alkyl, substituted alkyl, aryl, and substituted aryl;
      R² are divalent linking groups which can be the same or different;
      R³ are monovalent moieties which can independently be the same or different and are selected from the group consisting of alkyl, substituted alkyl, aryl, substituted aryl, and -R²X;
      R⁴ are monovalent moieties which can independently be the same or different and are selected from the group consisting of alkyl, substituted alkyl, aryl, substituted aryl, and -R²X;
      X are monovalent moieties having ethylenic unsaturation which can be the same or different;
      U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
      R⁹ are divalent linking groups which can be the same or different;
      n is an integer of 15 to 300;
      r is an integer of 0 to 1; and
      s is an integer of 0 to 3;
      wherein said siloxane has an average of at least two -R²X groups; and
   (ii) 70 to 99 weight percent of acrylate copolymer comprised of monofunctional free radically polymerizable vinyl monomers and monoethylenically unsaturated aromatic ketone monomers;
      wherein said vinyl monomers are selected from the group consisting of acrylic acid, methacrylic acid, esters of acrylic acid comprising 4 to 21 carbon atoms, esters of methacrylic acid comprising 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof,
         and said aromatic ketone monomer has the formula: 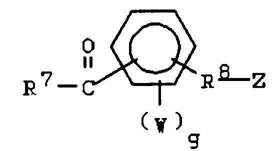 wherein
      R⁷ is selected from the group consisting of alkyl groups comprising 1 to 4 carbon atoms and phenyl wherein R⁷ may be optionally substituted with one or more substituents selected from the group consisting of halogen atoms, alkoxy groups, and hydroxyl groups, further provided that when R⁷ is phenyl substituted with one or more hydroxyl groups, any such hydroxyl group(s) must be meta or para to the aromatic carbonyl;
      W is selected from the group consisting of halogen, alkoxy, and hydroxyl groups, provided that when W is a hydroxyl group, W must be situated meta or para to the aromatic carbonyl;
      g is an integer ranging from 0 to 4;
      R⁸ is a divalent linking group; and
      Z is selected from the group consisting of alkenyl groups and ethylenically unsaturated acyl groups, said aromatic ketone monomer comprising from 0.025 percent to 0.5 percent by weight of said copolymer and the degree of polymerization of said copolymer being such that said copolymer has an inherent viscosity of from 0.15 dl/g to 1.4 dl/g before crosslinking; wherein the weight percentages of said siloxane and said copolymer are based upon the total weight of the homogeneous mixture; and
(b) curing said mixture by exposure to medium or high intensity ultraviolet radiation in the absence of solvent.

The properties of the PSA of the invention can be tailored over a wide range through variation in the nature(s) and amount(s) of the free radically polymerizable monomer(s) and in the molecular weight(s) and amount(s) of multifunctional siloxane(s). Thus, in comparison with known permanently removable systems, this invention provides wider variation in the level of adhesion and lower adhesive transfer. Other advantages in the method of preparing of the PSA of the invention include reduction or elimination of solvent and, thus, of drying procedures, and, as a radiation-curing method the ability to cure without damage to heat sensitive substrates.

### Silicones

A variety of silicones can be used according to the present invention. In order to reduce the peel adhesion of the pressure sensitive adhesive composition, about 1 to about 30 weight percent coreactive multifunctional silicone is used based upon the total weight of the PSA composition, preferably about 1 weight to about 10 weight percent, which gives a range of peel adhesion values suitably low for removability and also limits the adhesion build of the adhesive on longer term dwell. We theorize however, that as little as 0.1 percent would yield a composition having improved removability. The coreactive multifunctional siloxane has, on average, at least two, preferably about 2 to about 6, free radically reactive functional groups either pendant from the poly(siloxane) chain or at the termini of the chain or a combination of both. Each free radically reactive functionality preferably contains a carbon-carbon double bond and is most preferably an acrylate or methacrylate group as these readily react in free radical polymerization ensuring good incorporation. When the second method of preparation is used this free radically reactive functionality is preferably connected to the siloxane chain through a polar functionality such as those selected from the group consisting of amide, urethane, and urea linking groups or is isolated from the siloxane chain by a short block of a polar polymer such as a polyether. The presence of this polar functionality or polymeric block serves to both compatibilize the siloxane with the acrylate polymer and makes the free radically reactive functionality more accessible to the free radical generated by the aromatic ketone monomer on exposure to ultraviolet radiation (UV).

The coreactive multifunctional siloxane (I) is preferably a poly(dimethyl siloxane) having a number average molecular weight of at least about 1,000, most preferably between about 1,000 and about 20,000. This allows for the most efficient reduction in peel adhesion at a given loading without causing difficulties with gross incompatibility prior to cure.

One preferred type of coreactive multifunctional siloxane suitable for use in the permanently removable PSA of the invention is commercially available under the trademark Tego® silicone acrylate 705, manufactured and sold by Goldschmidt Chemical Company of Hopewell, Virginia. Tego® 705 is represented by the structure: 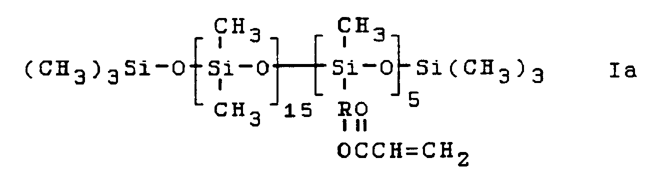 derived from general structure I wherein
s = 0;
R¹ and R³ each comprise -CH₃;
n = 20; and
R⁴ are independently selected from the group consisting of -CH₃ and XR²-, wherein XR²- is represented by the structure: 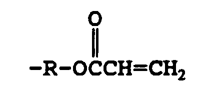
wherein R is a divalent hydrocarbon linking group.

A second preferred type of coreactive multifunctional siloxane suitable for use in the permanently removable PSA of the invention are those that are prepared by reaction of an organopolysiloxane containing two or more nucleophilic moieties (alkyl substituents with amine or alcohol functionality) with an electrophile having ethylenic unsaturation, X, and such other functionality that, upon reaction with the nucleophilic organopolysiloxane, not only an X group but also an amide, substituted amine, urea, urethane, carbonate, or ester moiety is provided. Such nucleophilic organopolysiloxanes are known and many are commercially available.

One such commercially available nucleophilic organopolysiloxane is manufactured and sold by Dow Corning of Midland, Michigan under the trade name Q4-3667 which is a triblock polymer containing a polydimethyl siloxane midblock and polyethylene oxide end blocks terminated with hydroxyl functionality. Upon reaction with isocyanate ethyl methacrylate (IEM), a coreactive multifunctional siloxane suitable for use in the permanently removable PSA of the invention is obtained as shown by the structure below 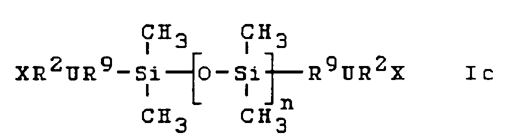 derived from general structure I wherein s = 1, n = 16, r = 1;
R¹, R³, R⁴ each represent -CH₃;
U represents the structure -(CH₂CH₂O)₁₆-, and R⁹ represents a divalent hydrocarbon linking group;
X represents the structure 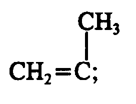 and
R² represents the structure

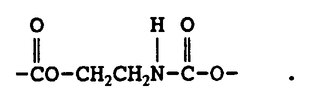

A preferred general structure is Formula Ic wherein U represents -(CH₂CH₂O)ₘ- and m is an integer of about 10 to about 180, preferably about 10 to about 45.

Such block polymers are particularly suited for use in the second method of preparation of the permanently removable PSAs of the invention due to improved compatibility between the siloxane and the acrylate copolymer. Block and graft polymers can also be obtained by reacting a multifunctional silicone amine or alcohol with, for example, a diisocyanate followed by reaction with a telechelic polyether diamine or diol and functionalization with the X group containing electrophile. Such an approach allows for block and graft polymers containing poly(ether) segments selected from the group consisting of poly(ethylene oxide), poly(propylene oxide), poly(1,2-butylene oxide), and poly(tetramethylene oxide) wherein said segments range in number average molecular weight from about 400 to about 10,000, preferably about 400 to 2000, allowing for good compatibilization of the silicone with the acrylate copolymer without greatly reducing the silicone content of the coreactive multifunctional siloxane. A second preferred type of nucleophilic organopolysiloxane is the organopolysiloxane diamine represented by the general formula 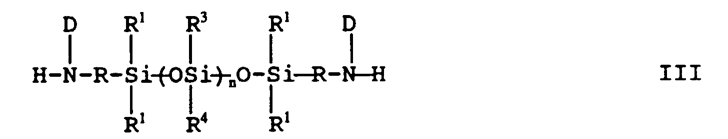 wherein: n, R¹, R³, and R⁴ are defined above, D are monovalent moieties which can be same or different selected from the group consisting of hydrogen, an alkyl group of about 1 to about 10 carbon atoms, aryl, and substituted aryl; and R are divalent hydrocarbon groups which can be the same or different.
Upon reaction with an elecrophile having the ethylenic unsaturation, X, and such other functionality that upon reaction with the organopolysiloxane diamine not only a terminal X group, but also an amide, substituted amine, urea, or urethane moiety is provided, compounds Id are obtained as represented by the general structure: 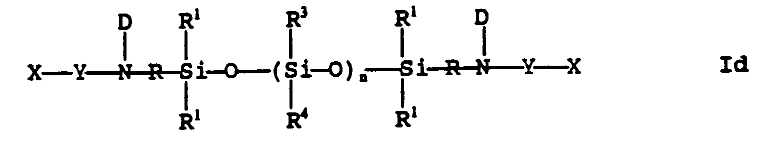 derived from general structure I wherein s = 1, r = 0; R, R¹, R³, R⁴, D and X are as defined above, and Y are divalent linking groups which can be the same or different and which serve to activate X toward free radical polymerization. Examples of the types of functionality required in such electrophilic compounds include acid halide, acid anhydride, cyclic anhydride, and azlactones, each of which provides an amide moiety upon reaction with the diamine, epoxy or acrylate, each of which provides a substituted amine moiety, and isocyanate, which provides a urea moiety.

Preferably, X comprises 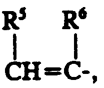 wherein R⁵ is selected from the group consisting of hydrogen and -COOH and R⁶ is selected from the group consisting of hydrogen, methyl, and -CH₂COOH. Most preferably, R⁵ comprises hydrogen and R⁶ is selected from the group consisting of hydrogen and methyl. The reaction can be carried out at a temperature of about -10°C to about 50°C and under atmospheric pressure by combining the diamine and the electrophile while providing appropriate mixing. A nonreactive organic solvent can be used as a diluent but is not necessary, and the two reactants can be charged into the reaction vessel in any order. Alternatively, an organopolysiloxane diamine according to Formula III above can be reacted first with a compound containing two electrophilic groups, e.g., a diisocyanate, (or with a compound such as phosgene) and the resultant product reacted in a second step with a nucleophile, e.g., an amine or an alcohol, to provide terminally difunctional silicone according to Formula Id. When an alcohol such as hydroxyethyl acrylate, hydroxyethyl methacrylate, or hydroxypropyl methacrylate is utilized, the product organopolysiloxane contains urethane moieties.

The divalent linking group Y is generated upon reaction of the electrophile with the diamine and is chosen so as to activate the ethylenically unsaturated monovalent X group towards free radical polymerization, particularly free radical copolymerization with the vinyl monomer(s) of element (ii) in the first method. The Y group accomplishes this by changing the electron density of X. Y is selected from, for example, the group of structures containing aromatic moieties which when bound to X yield vinyl pyridinyl or styrenic-type functionalities; structures containing carboxyl moieties which when bound to X at the oxygen side yield vinyl ester and isopropenyl ester-type functionalities; structures containing carboxyl moieties which when bound to X at the carbonyl side yield acrylate, methacrylate, maleate, fumarate, and itaconate-type functionalities; structures containing carboxamide moieties which when bound to X at the nitrogen side yield N-vinyl amide and N-isopropenyl amide-type functionalities; and structures containing carboxamide moieties which when bound to X at the carbonyl side yield acrylamide, methacrylamide, and maleimide-type functionalities. A special example of this final structure is when Y comprises a carbonyl group which, depending upon the nature of X, can result in acrylamide, methacrylamide, beta-carboxy acrylamide, or maleimide functionality.

The letter n, as indicated previously, represents an integer of about 15 to about 300, thus providing compatibility and minimizing the build in adhesion on long term dwell.

Organopolysiloxane diamines useful in the preparation of these preferred telechelic silicones useful in the present invention can be prepared in various ways. In a first method, an organopolysiloxane terminated at both chain ends with hydroxy groups, as represented by the general formula 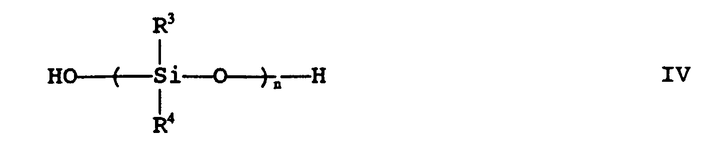 where R³, R⁴, and n are as defined above, can be subjected to a condensation reaction with a compound represented by the general formula 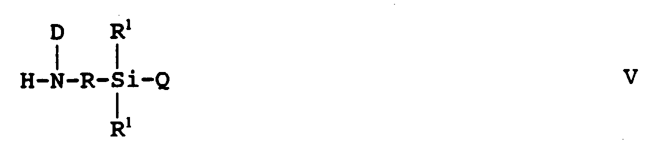 where D, R, and R¹ are as defined above and Q is a hydroxy group or a hydrolyzable group. A second method involves the reaction of a cyclic organosiloxane, represented by the general formula 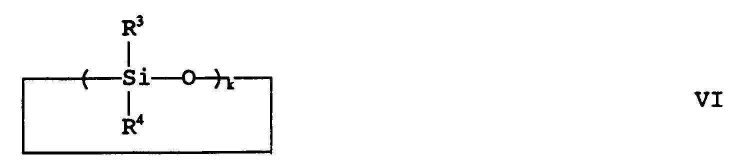 where R³ and R⁴ are as defined above and k is a positive integer of 3 to 8, with an amine functional endblocker, represented by the general formula 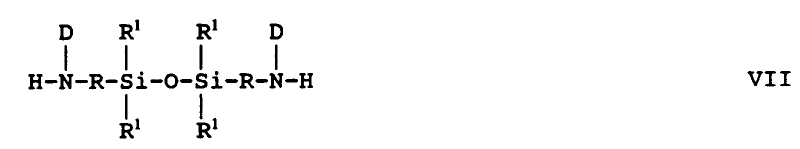 where D, R, and R¹ are as defined above, in the presence of a basic catalyst such as tetramethylammonium hydroxide or triorganosilanolate. A third method, a modification of the second, is preferred and involves running the reaction in two stages utilizing a minimum amount of an essentially anhydrous amino alkyl functional silanolate catalyst represented by the general formula 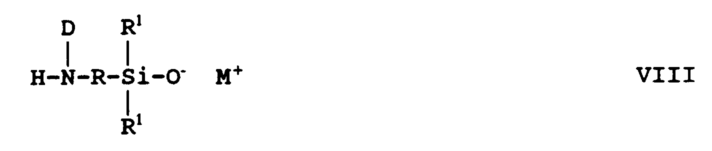 where D, R, and R¹ are as defined above and M⁺ is a cation selected from the group consisting of K⁺, Na⁺, and tetraorganoammonium ion, with N(CH₃)₄⁺ being preferred. In the first stage of the reaction, a low molecular weight organopolysiloxane diamine, represented by the general formula 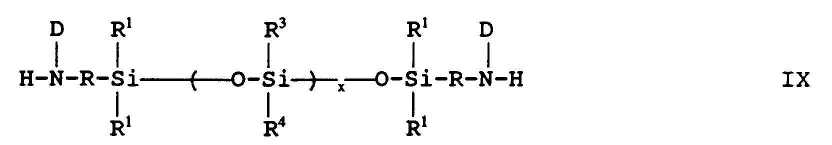 where D, R, R¹, R³, and R⁴ are as defined above and x is an integer of about 4 to about 40, is prepared by reacting an amine functional disiloxane endblocker represented by Formula VII above with a cyclic organosiloxane represented by Formula VI in the presence of a catalytic amount of essentially anhydrous amino alkyl functional silanolate represented by Formula VIII in an inert atmosphere such as nitrogen or argon. The preferred catalyst for use in this reaction is 3-aminopropyl dimethyl tetramethylammonium silanolate, which can be obtained as a crystalline solid from the reaction of one molar equivalent of 1,3-bis(3-aminopropyl) tetramethyldisiloxane with two molar equivalents of tetramethylammonium hydroxide pentahydrate in tetrahydrofuran under reflux, followed by drying under vacuum (0.1 mm Hg) for five hours at 60°C. The amount of catalyst employed should be less than about 0.05 percent by weight, preferably about 0.005 to about 0.03 percent by weight of the resultant organopolysiloxane diamine of Formula III. The reaction can be carried out in bulk at a temperature of about 80°C to about 90°C, and under these conditions is usually complete in about 0.5 to about 2 hours, as judged by substantially complete disappearance of the endblocker in the reaction mixture as determined by vapor phase chromatography. The second stage of the reaction involves the slow addition of the remainder of the cyclic organosiloxane required to achieve the desired molecular weight. This addition is preferably carried out dropwise at such a rate that the cyclic organosiloxane is incorporated into the polymer about as fast as it is added, usually in about five to seven hours at the reaction temperature of about 80°C to about 90°C. By utilizing this two-stage method with a minimum amount of essentially anhydrous catalyst, organopolysiloxane diamines represented by Formula III above can be consistently prepared having excellent difunctionality with little contamination from monofunctional and nonfunctional polysiloxane impurities.

Preferred organopolysiloxane diamines for use in preparing the telechelic silicones useful in the present invention are those for which n is an integer of about 15 to about 300, R is selected from the group consisting of alkylene of one to about twelve carbon atoms, alkylarylene, and arylene, R¹ are independently selected from the group consisting of alkyl of one to about twelve carbon atoms, substituted alkyl of one to about twelve carbon atoms, aryl, and substituted aryl, R³ and R⁴ are at least 50 percent methyl with the remainder selected from the group consisting of alkyl of two to about twelve carbon atoms, substituted alkyl of two to about twelve carbon atoms, vinyl, aryl, and substituted aryl, and D is hydrogen. Such a range of molecular weights provides the best balance of properties in the PSA compositions. Most preferably, R is alkylene of one to about twelve carbon atoms and R¹, R³, and R⁴ are methyl, as polydimethylsiloxanes are the most readily available and the most inert.

Examples of electrophiles suitable for reaction with organopolysiloxane diamines to produce the telechelic silicones include but are not limited to isocyanatoethyl methacrylate; alkenyl azlactones such as vinyl dimethyl azlactone and isopropenyl dimethyl azlactone;
m-isopropenyl-α,α-dimethyl benzyl isocyanate; glycidyl methacrylate; acryloyl ethyl carbonic anhydride; maleic anhydride; and multifunctional acrylates such as hexanediol diacrylate and trimethylolpropane triacrylate. Some electrophiles, e.g., isocyanatoethyl methacrylate, are commercially available, and others can be prepared via literature methods. Alkenyl azlactones and their preparation are described in U.S. Patent No. 4,777,276 (Rasmussen et al.). According to Rasmussen, the synthesis of the azlactones has been fully discussed in the literature by (a) Y. Iwakura, F. Toda, and Y. Torii, Tetrahedron, 23, 3363 (1967); (b) K. Hubner, F. Kollinsky, G. Mardert, and H. Pennewiss, Angew, Makromol. Chem. 11, 109 (1970); (c) L. D. Taylor and T. E. Platt, J. Polym. Sci. Polym. Letters Edit., 7, 597 (1969); particularly with regard to the 5-membered rings, the 2-alkenyl-1,3-oxazolin-5-ones. Typically, an amino acid such as 2-aminobutyric acid is reacted with the acylateing agent (e.g., (meth)acryloylchloride or (meth)acrylic anhydride) in the presence of a base (e.g., aqueous sodium hydroxide) to produce the acylated amino acid. Cyclization to the azlactone is then accomplished in the presence of a dehydrating agent (e.g., acetic anhydride, ethyl chloroformate, or dicyclohexylcarbodiimide). Acryloyl ethyl carbonic anhydride can be prepared from ethyl chloroformate and acrylic acid by the method of R. Hatada and H. Kondo given in Bull. Chem. Soc. Japan 41 (10), 2521(1968). Conditions for reaction of amines with multifunctional acrylates in a Michael addition reaction are described in U.S. Patent No. 4,603,086. For example, reaction of the electrophiles with organopolysiloxane diamines may be carried out by incorporating the above electrophiles in amounts of at least equimolar proportion to a primary amino group, optionally adding a solvent to form a uniform solution and reacting at a temperature of from room temperature to 100°C. Preferred electrophiles are those which react under relatively mild conditions with the organopolysiloxane diamine and include those selected from the group consisting of isocyanatoethyl methacrylate;
m-isopropenyl-α,α-dimethylbenzyl isocyanate; vinyl dimethyl azlactone; acryloyl ethyl carbonic anhydride; and maleic anhydride.

A preferred telechelic silicone for use in the permanently repositionable PSA composition of the invention comprises the organopolysiloxane of Formula Id wherein
X comprises 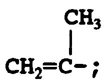
Y comprises 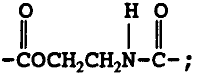
D=H;
R comprises -CH₂CH₂CH₂-; and R¹, R³, and R⁴ each comprise -CH₃.

Another preferred organopolysiloxane comprises the organopolysiloxane of Formula Id wherein
X comprises CH₂=CH-; Y comprises 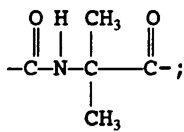 D=H;
R comprises -CH₂CH₂CH₂-; and R¹, R³, and R⁴ each comprise -CH₃.

Another preferred organopolysiloxane comprises the organopolysiloxane of Formula Id wherein
X comprises CH₂=CH-; Y comprises 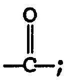
D=H;
R comprises
-CH₂CH₂CH₂-; and R¹, R³, and R⁴ each comprise -CH₃.

Another preferred organopolysiloxane comprises the organopolysiloxane of Formula Id wherein
X comprises 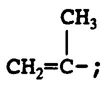 Y comprises 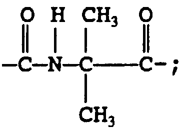
D=H;
R comprises -CH₂CH₂CH₂-; and R¹, R³, and R⁴ each comprise -CH₃.

Another preferred organopolysiloxane comprises the organopolysiloxane of Formula Id wherein
X comprises 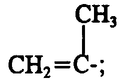
Y comprises 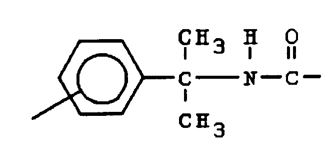
D=H;
R comprises -CH₂CH₂CH₂-; and R¹,R³, and R⁴ each comprise -CH₃.

### Free Radically Polymerizable Vinyl Monomer

A variety of free radically polymerizable vinyl monomers can be utilized directly in the first method of preparation of the permanently removable PSAs of the invention or can be used to make the acrylate copolymer utilized in the second method of preparation. The vinyl monomers are chosen such that a tacky or tackifiable material is obtained upon polymerization. Thus, the bulk of the monomers; 80 to 100 percent based upon the total vinyl monomer content by weight, preferably about 90 to about 100 percent by weight, used should be soft monomers, meaning those that when homopolymerized will have a glass transition temperature of less than about 0°C. Soft monomers include esters of acrylic acid comprising about 5 to about 21 carbon atoms and esters of methacrylic acid comprising about 8 to about 22 carbon atoms. Monomers selected from the group consisting of isooctyl acrylate, 2-ethylhexyl acrylate, butyl acrylate, 2-methylbutyl acrylate, 4-methyl-2-pentyl acrylate, sec-butyl acrylate, isononyl acrylate, isodecyl acrylate, and mixtures thereof, are preferred because of their ease of polymerization and the good PSA properties which result from them. Minor amounts of hard monomers, meaning those that when homopolymerized will have a glass transition temperature of greater than about 0°C, can be copolymerized with the soft monomers to impart cohesive strength and adjust adhesive performance. When used these hard monomers are present at about 0 to about 20 weight percent of the total vinyl monomer content, or acrylate copolymer weight, preferably, about 1 to about 10 weight percent to impart adequate cohesive strength without unduly affecting adhesive performance and without creating problems with siloxane compatibility.

Hard monomers include methyl acrylate and certain branched acrylate esters such as cyclohexyl acrylate, isobornyl acrylate and t-butyl acrylate; esters of methacrylic acid comprising about 5 to about 7 carbon atoms and certain branched methacrylate esters of higher carbon number such as isobornyl methacrylate, t-butyl methacrylate, and cyclohexyl methacrylate, vinyl esters of carboxylic acids such as vinyl acetate and isopropenyl acetate; styrene and substituted styrenes such as vinyl toluene and polar monomers including acrylic acid, methacrylic acid, hydroxyethyl acrylate, hydroxypropyl acrylate, acrylamide, substituted acrylamides such as N,N-dimethylacrylamide, acrylonitrile, methacrylonitrile, N-vinyl pyrrolidone, N-vinyl caprolactam, vinylidene chloride, and mixtures thereof. Acrylic acid, hydroxyethyl acrylate, N-vinyl pyrrolidone, and N,N-dimethylacrylamide are preferred due to their good copolymerizability with the preferred soft monomers and their ability to impart cohesive strength when used at low levels.

### First Method of Preparation

The permanently removable PSA of the invention can be prepared by polymerizing a mixture of coreactive multifunctional siloxane, free radically polymerizable vinyl monomer, and photoinitiator with low intensity ultraviolet light in the absence of oxygen and solvent.

According to this method 1 to 10 percent by weight, of one or more of the coreactive multifunctional siloxanes represented by Formula I above, is combined with 65 to 99 percent by weight, preferably about 90 to about 99 percent by weight of one or more of the free radically polymerizable vinyl monomers, and with about 0.1 to about 5 percent by weight, preferably about 0.1 to about 1 percent by weight, of a photoinitiator to form a homogeneous solution. Small amounts of non-reactive diluent may optionally be included in this composition to improve homogeneity. Suitable diluents include those which do not interfere with the copolymerization of the siloxane of Formula I and the vinyl monomer, exemplified by solvents such as ethyl acetate, cyclohexane, hexane, toluene, butyl acetate, octamethyl cyclotetrasiloxane, and the like. The term "interfere" as used herein refers to inhibition or significant chain transfer. Diluent, if included, typically comprises about 1 to about 20 weight percent based upon the weight of siloxane, monomer, and photoinitiator mixture, preferably about 2 to about 10 weight percent for reasons of providing good homogeneity without requiring an extensive post-polymerization drying step.

The permanently removable PSA of the invention is cured in as oxygen-free an environment as possible, e.g., in an inert atmosphere such as nitrogen gas or by utilizing a barrier of radiation-transparent material having low oxygen permeability. A substantially oxygen free environment typically contains less than about 1 percent oxygen.

Suitable photoinitiators include those selected from the group consisting of benzoin ethers, benzophenone and derivatives thereof, acetophenone derivatives, camphorquinone, mixtures thereof, and the like. Photoinitiator is generally used at a concentration of from about 0.1 percent to about 5 percent by weight of the adhesive composition. If desired, the PSA composition of the invention can also be cured thermally, requiring the use of thermal initiator, such as those selected from the group consisting of peroxides (i.e. lauroyl peroxide, etc.), azo compounds (i.e. azo-bis-isobutyronitrile, etc.), persulfates (i.e. sodium persulfate and potassium persulfate, etc.), and the like, generally at a concentration of from about 0.5 percent to about 5 percent by weight of the adhesive composition.

Curing is accomplished by subjecting the mixture of siloxane, free radically polymerizable vinyl monomer, and photoinitiator to low intensity ultraviolet radiation such as that provided by fluorescent black light bulbs as described in Martens, U.S. Patent No. 4,181,752, giving the mixture a sufficiently long dose at the low intensity utilized that high conversion (i.e. greater than about 95 percent) of monomer to polymer is achieved. Radiation from such a source has a rate of irradiation in the 300 to 400 nm wavelength region of not more than 7 milliwatts per square centimeter, and hence is characterized as low intensity.

### Second Method of Preparation

The permanently removable PSA of the invention can be prepared by curing a mixture of coreactive multifunctional siloxane and prepolymerized acrylate copolymer containing a low level of a copolymerized aromatic ketone monomer with medium or high intensity ultraviolet light.

According to this second method 1 to 10 percent by weight, of one or more of the coreactive multifunctional siloxanes represented by Formula I above, is combined with 70 to 99 percent by weight, preferably about 90 to about 99 percent by weight, of an acrylate copolymer prepared from the free radically polymerizable vinyl monomers and a copolymerizable monoethylenically unsaturated aromatic ketone monomer free of ortho-aromatic hydroxyl groups, wherein said weight percentages are based on the overall weight of the adhesive composition.

Aromatic ketones free of ortho-aromatic hydroxyl groups absorb ultraviolet radiation to form a triplet excited state through intersystem crossing. These excited state molecules can abstract hydrogen radicals from the acrylate copolymer. The free radical sites thus generated on the acrylate copolymer can combine to form crosslinks and also react with the polymerizable functionality on the siloxane to give a chemical bond between the silicone and the acrylate resulting in incorporation. The semi-pinacol radical which results from the combination of the photocrosslinker and the hydrogen radical can also lead to crosslinking since the photocrosslinker is copolymerized. The presence of a hydroxyl group as ring substituent in a position ortho to the carbonyl on the aromatic ring will inhibit the crosslinking ability of the aromatic ketone monomer. Accordingly, the aromatic-ketone monomer is free of ortho-aromatic hydroxyl groups.

Preferred aromatic ketone monomers are represented by the general formula: 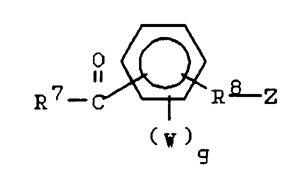 wherein
R⁷ is selected from the group consisting of alkyl groups comprising about 1 to about 4 carbon atoms and phenyl, wherein R⁷ may optionally be substituted with one or more substituents selected from the group consisting of halogen atoms, alkoxy groups, and hydroxyl groups, and wherein when R⁷ is phenyl substituted with one or more hydroxyl groups, hydroxyl groups must be meta or para to the aromatic carbonyl;
W is selected from the group consisting of halogen, alkoxy, and hydroxyl, provided that when a W is a hydroxyl group, W must be meta or para to the aromatic carbonyl;
g is an integer ranging from 0 to 4;
R⁸ is a divalent linking group, preferably selected from the group consisting of a covalent bond, an oxygen atom (-O-), an amino group (-NR'- wherein R¹ is selected from the group consisting of hydrogen and a lower alkyl), an oxyalkyleneoxy group (-O-R"-O- wherein R" is an alkylene group), a carbamoylalkyleneoxy group
   (-O-R"-O-C(O)-N-(R')-R‴- wherein R‴ is a covalent bond or an alkyleneoxy group such as -R"-O- wherein R" is an alkylene group); and
Z is selected from the group consisting of alkenyl and ethylenically unsaturated acyl. Particularly preferred aromatic ketone monomers are the acryloxybenzophenones, e.g. para-acryloxybenzophenone.

To obtain the desired degree of compliance and incorporation of the coreactive multifunctional siloxane, the weight of aromatic ketone monomer is generally within the range of about 0.01 weight percent to about 2 weight percent, preferably about 0.025 weight percent to about 0.5 weight percent of the total weight of all monomers in the prepolymerized acrylate copolymer. Levels of aromatic ketone monomer of about 2 weight percent or greater are preferably avoided due to the objectionable decrease in the compliance of the resulting adhesive.

The free radically polymerizable vinyl monomer and aromatic ketone monomer may be dissolved in a suitable inert organic solvent and polymerized by standard free radical polymerization utilizing a suitable free radical initiator such as those described in U.S. Reissue Patent No. 24,906 (Ulrich). Suitable initiators which may be utilized include azo compounds such as 2,2'-azo-bis(isobutyronitrile), hydroperoxides such as tert-butyl hydroperoxide, peroxides such as benzoyl peroxide or cyclohexanone peroxide. Generally, from about 0.01 weight percent to about 1 weight percent of initiator such as ultraviolet activatable or thermally activatable initiator based upon the total polymerizable composition is used, preferably about 0.01 weight percent to about 0.5 weight percent.

The organic solvent utilized in the free radical polymerization may be any organic liquid which is a solvent for the reactants and product, that is inert to the reactants and product, and will not otherwise adversely affect the reaction. Suitable solvents include ethyl acetate and mixtures such as ethyl acetate with toluene, heptane and toluene and isopropyl alcohol and heptane with toluene and methyl alcohol. Other solvent systems are useful. The amount of solvent is generally 50 to 400 percent by weight based on the weight of the reactants (i.e. monomers and initiator). Copolymerization may be carried out by other well known techniques such as suspension, emulsion or bulk polymerization.

In general, the inherent viscosity of the uncrosslinked acrylate copolymer should range from 0.15 to 1.4 dl/g, to obtain the desired degree of polymerization of the copolymer. The test procedure followed and the apparatus that can be used to measure inherent viscosity are described in detail in "Textbook of Polymer Science", F. W. Billmeyer, Wiley-Interscience, Second Edition, 1971, Pages 84 and 85.

The coreactive multifunctional siloxane is added after polymerization of the vinyl monomer and aromatic ketone monomer. It can be added after solvent removal if the adhesive is to be hot melt coated, but is preferably added to the polymer solution, particularly when the polymer is in a solvent that the siloxane is soluble in. This allows for good homogenization of the siloxane in the acrylate polymer and ease in mixing. Suitable organic solvents include but are not limited to ethyl acetate, toluene, methylethyl ketone, heptane, isopropanol, and mixtures thereof.

1 weight percent to 10 weight percent coreactive multi-functional siloxane is used; which gives a range of peel adhesion values suitably low for removability and also limits the adhesion build of the adhesive on longer term dwell. We theorize that in order to reduce the peel adhesion of the pressure sensitive adhesive composition, as little as about 0.1 weight percent added coreactive multifunctional siloxane is all that need be included. The coreactive multifunctional siloxane has, on average, at least two free radically reactive functionalities that are pendant from the poly(siloxane) chain or at the termini of the chain or a combination of both. This free radically reactive functionality preferably contains a carbon-carbon double bond and is most preferably an acrylate or methacrylate group as these readily react with the free radical generated by the aromatic ketone monomer on exposure to ultraviolet light, ensuring good incorporation. This free radically reactive functionality is preferably connected to the siloxane chain through a polar functionality such as an amide, urethane, or urea linkage or is isolated from the siloxane chain by a short block of a polar polymer such as polyethylene oxide. The presence of this polar functionality or polymeric block serves to both compatibilize the siloxane with the acrylate polymer and makes the free radically reactive functionality more accessible to the free radical generated by the aromatic monomer on exposure to UV.

The coreactive multifunctional poly(siloxane) is preferably a poly(dimethyl siloxane) having a number average molecular weight above about 1,000 most preferably between about 1,000 and about 20,000. This allows for the most efficient reduction in peel adhesion at a given loading without causing problems with gross incompatibility prior to cure.

After the adhesive has been coated, it is subjected to ultraviolet radiation of sufficient intensity for a time sufficient to crosslink the copolymer to the desired degree and incorporate the coreactive multifunctional siloxane by means of the aromatic ketone monomer. The degree of crosslinking by means of the aromatic ketone monomer is controlled by the amount of it included in the copolymer and the intensity of the crosslinking radiation to which the uncrosslinked copolymer is exposed during the method of preparing an adhesive of this invention.

While it is possible to use a comparative excess of aromatic ketone monomer and adjust the degree of crosslinking by controlling the intensity of the radiation to which the uncrosslinked copolymer is exposed, the degree of crosslinking is preferably controlled by using a comparative excess of radiation and by adjusting the amount of aromatic monomer in the uncrosslinked copolymer. In this preferred method of preparing the adhesive of this invention, the use of commercially-available medium pressure mercury lamps having an output of about 80 watts per cm (200 watts per inch) and having a spectral output over a range of 180 to 430 nanometers is preferred. Radiation from such a source has a rate of irradiation of greater than 40 milliwatts per square centimeter and hence is characterized as medium or high intensity. The exposure is determined by the speed at which the adhesive-coated sheet moves beneath the lamps and the distance between the lamps and the exposed surface. The exposure can be measured using an integrating radiometer (Dynachem™ Model 500) available from Dynachem Corporation, 2631 Michelle Drive, Tustin, CA 92680. The amount of radiant energy is measured in millijoules per square centimeter.

### Optional Additives:

One or more multifunctional acrylates such as 1,6-hexanediol diacrylate, 1,4-butanediol diacrylate, trimethylolpropane triacrylate, and 1,6-hexanediol dimethacrylate can also be used as crosslinker, which enhance the curing rate and have a synergistic effect on the reduction in peel adhesion and prevention of build on long term dwell for a given loading of coreactive multifunctional siloxane. The term "multifunctional" as used herein to describe a compound refers to a compound having at least two functional groups. The amount of acrylate crosslinker preferably does not exceed about 2 weight percent of the total weight of the adhesive composition. When utilized, the amount of acrylate crosslinker preferably comprises from about 0.05 to about 2 weight percent, most preferably about 0.05 to about 0.5 weight percent, of the total weight of the adhesive composition. If the concentration of crosslinker is too high, the cured PSA composition has a high crosslink density (i.e., low molecular weight between crosslinks) resulting in poor tack and peel adhesion properties.

Prior to curing, the permanently removable PSA of the invention can be frothed to make a foam, using an inert gas such as nitrogen in order to form a permanently removable PSA having gas bubbles dispersed throughout. A foam-like appearance can also be obtained by addition of fillers such as glass or plastic microbubbles for example, about 25 to about 75 percent by volume of the adhesive composition. The composition can also contain silica filler for modification of PSA properties, e.g., at levels up to about 15 percent by weight of the adhesive composition. When utilized, the amount of silica filler is preferably about 0.5 to about 15 weight percent, most preferably about 0.5 to about 5 weight percent. Either hydrophilic or hydrophobic silica can be utilized, but hydrophobic silica is preferred due to its reduced tendency to "structure", i.e., to hydrogen bond with the polysiloxane and form an elastic mass prior to cure. Such structuring can impede normal processing operations such as extrusion.

Other common non-copolymerizable additives such as pigments, dyes, quartz powder, glass fibers, calcium carbonate, flame retardants, thermal stabilizers, polymerization inhibitors, plasticizers, adhesion promoters, and the like can also be included in the permanently removable PSA composition.

If desired, tackifier for the vinyl phase can be included to further modify the properties of the permanently removable cured PSA. When utilized, the tackifier typically comprises up to about 100 parts by weight, more preferably from about 5 to about 100 parts by weight, and most preferably from about 10 to about 70 parts by weight, per 100 parts by weight of the vinyl monomer phase. Examples of such tackifiers include those selected from the group consisting of rosin acids, rosin esters, synthetic aromatic resins, synthetic aliphatic resins, terpene resins, and mixtures thereof.

### Coating Methods/Substrates

Prior to cure, the permanently removable PSA composition of the invention, depending on its viscosity, can be coated via any of a variety of conventional coating methods, such as roll coating, knife coating, or curtain coating, or can be extruded. The composition can be applied to at least a portion of at least one major surface of suitable flexible or inflexible backing materials and cured to produce PSA-coated sheet materials. Useful flexible backing materials include but are not limited to paper, plastic films such as poly(propylene), poly(ethylene), poly(vinyl chloride), poly(tetrafluoroethylene), polyester [e.g., poly(ethylene terephthalate)], polyamide film such as DuPont's Kapton™, cellulose acetate, and ethyl cellulose. Backing materials can also be of woven fabric formed of threads of synthetic or natural materials such as cotton, nylon, rayon, glass, or ceramic material, or they can be of nonwoven fabric such as air-laid webs of natural or synthetic fibers or blends of these. In addition, suitable backing materials can be formed of metal, metallized polymeric film, or ceramic sheet material. The PSA-coated sheet materials can take the form of any article conventionally known to be utilized with PSA compositions, such as labels, tapes, transfer tapes (comprising a film of the PSA borne on at least one release liner), signs, covers, marking indices, and the like. Primers can be utilized, but they are not always necessary.

### EXAMPLES

The invention is further illustrated by the following examples, in which all parts, percentages, ratios, etc. in each example and the rest of the Specification are by weight unless otherwise indicated.

### Test Methods

The test methods used to evaluate the PSA-coated flexible sheet materials of the examples are industry standard tests. The standard tests are described in various publications of the American Society for Testing and Materials (ASTM), Philadelphia, Pennsylvania, and the Pressure Sensitive Tape Council (PSTC), Glenview, III., and are detailed below. The reference source of each of the standard test methods is also given.

### 180° Peel Adhesion (Reference: ASTM D3330-78; PSTC-1 (11/75))

Peel adhesion is the force required to remove a coated flexible sheet material from a test panel measured at a specific angle and rate of removal. In the examples, this force is expressed in Newtons per 100 mm (N/100mm) width of coated sheet. The procedure followed was:
1. A 12.7 mm width of the coated sheet was applied to the horizontal surface of a clean glass or stainless steel test plate with at least 12.7 lineal cm in firm contact. Alternatively a 25.4 mm width strip of white bond paper available from 3M as "696" was adhered to the test plate with double coated tape and the coated sheet applied to the top surface of this paper. A 2 kg hard rubber roller was used to apply the strip.
2. The free end of the coated strip was doubled back nearly touching itself so the angle of removal was 180°. The free end was attached to the adhesion tester scale.
3. The glass test plate was clamped in the jaws of a tensile testing machine which was capable of moving the plate away from the scale at a constant rate of 2.3 meters per minute.
4. The scale reading in Newtons was recorded as the tape was peeled from the glass surface. The data is reported as the average of the range of numbers observed during the test.
5. Aged samples were allowed to dwell three days against the substrate of interest at constant temperature (22°C) and humidity (50 percent RH) before peeling.

### 90° Peel Adhesion

A modified version of PSTC Method PSTC-3 intended for double-coated tapes was used for this test. This well-known method is available from the Pressure Sensitive Tape Council of Glenview, Illinois, USA. The peel measurements were made at 90° rather than 180° and an anodized aluminum film was substituted for the polymeric film backing normally used for this test. All peel adhesion measurements are given in Newtons per decimeter (N/dm).

The adhesive layer to be tested was produced by photopolymerizing the prepolymerized syrup between two layers of siliconized biaxially oriented polyethylene terephthalate (PET) film. This laminate was cut to a width of 1.27 cm. After removal of one layer of PET, the adhesive was adhered to a smooth stainless steel plate. The second layer of PET was removed and a 1.60 cm wide 140 micron thick anodized aluminum strip was adhered to the adhesive under a weight of a 2.04 kg hard rubber-covered steel roller with 2 passes in each direction.
A. From stainless steel, short dwell time:
   After 20 minutes "90° peel adhesion" was measured by moving the free end of the aluminum strip away from the stainless steel plate at 90° and at a rate of 300 mm per minute using a tensile tester.
B. From stainless steel, long dwell time:
   The test was performed as above except that the sample remained in contact with the stainless steel plate for 3 days before the measurement was made.
C. From paper, short dwell:
   Peel adhesion from photocopier paper was measured after a 20 minute dwell time. The paper was 90 micron thick HIFI Silico HFL with a weight of 90 g/sq. meter, ciay-coated on both sides.

### Tack

The tack of these adhesives was qualitatively assessed by a "finger appeal" test and assigned a value of poor, medium, good, or excellent. On this scale Scotch" brand Magic" transparent tape (available from Minnesota Mining and Manufacturing Company) has a rating of excellent.

### Preparation of Functional Silicones

Multifunctional polysiloxanes were obtained commercially or prepared as described below. These are identified in the examples and in the tables as 5K ACMAS, 5K MAUS, 10K MAUS, 20K MAUS, and 10K SiMAC wherein the number denotes the number average molecular weight in thousands and the letters indicate the type of functionality as defined below; RC705 a polydimethyl siloxane having on average 5 pendant acrylate groups obtained from Goldschmidt Chemical; and IEM triblock, a poly(ethylene oxide)-poly(dimethyl siloxane) functionalized triblock polymer obtained from Dow Corning under the trade name Q4-3667 and functionalized with isocyanatoethyl methacrylate as described below.

### Abbreviations & Tradenames

- MAUS: - methacryloxyurea siloxane
- ACMAS: - acrylamidoamido siloxane
- SiMAC: - mono methacryloxy propyl terminated silicone macromonomer
- IEM: - isocyanatoethyl methacrylate
- UV: - ultraviolet radiation
- THF: - tetrahydrofuran
- Tego® RC705: - tradename of functional siloxane having on average 5 pendant acrylate groups sold by Goldschmidt Chemical
- Immed: - immediate
- RH: - relative humidity
- Triblk: - triblock
- Comp.: - comparative

Synthesis of difunctional precursors for the ACMAS and MAUS free-radically polymerizable siloxanes described in this application was performed in the following way:

### Preparation of α,ω-bis[3-aminopropyl) polydimethylsiloxane (PDMS)

A mixture of 14.9 g (0.06 mole) bis(3-aminopropyl) tetramethyldisiloxane endblocker and 103.0 g octamethylcyclotetrasiloxane (D₄) (previously purged for 10 minutes with argon, less than 20 ppm H₂O by Karl-Fischer Titration) was stirred and heated to 80°C to 85°C under argon in an oil bath. A small amount (0.03 g to 0.05 g) of catalyst, anhydrous 3-aminopropyl dimethyl tetramethylammonium silanolate, was added and the reaction followed by vapor phase chromatography (VPC). In 30 to 45 minutes, the viscosity had increased and the end blocker had completely disappeared. Additional D₄ (250.0 g) was added dropwise at such a rate that the ratio of integrated areas of D₄ to D₅ peaks in the VPC of the reaction mixture did not exceed about 6 or 7:1 (5-6 hours). D₅ represents decamethylcyclopentasiloxane which is a byproduct of the equilibration. After addition was complete, heating was continued until equilibrium was achieved as judged by a return of the D₄:D₅ ratio to about 1.5:1 (2-3 hours). The reaction mixture was then heated to 150°C for 30 minutes to decompose the catalyst and then stripped of residual cyclics under high vacuum (0.1-1.0 mm Hg). After cooling to 25°C, the diamino PDMS was obtained as a clear, colorless oil. The yield was 307.1 g (87 percent). The molecular weight of the product was determined by titration of a sample in THF/IPA with 0.05 N HCl to a bromophenol blue end point, and, in this case, was found to be 5,100 g/mol (theoretical Mₙ = 5,000 g/mol). Using this procedure, but varying the ratio of endblocker to D₄, aminopropyl-terminated polydimethylsiloxanes with molecular weights of 10,000, and 20,000 were prepared.

### 5,000K ACMAS

Polydimethylsiloxane terminated on both ends with acrylamidoamido groups and having a number average molecular weight of about 5,000 (5K ACMAS) was prepared by thoroughly mixing 50 g (0.01 mole) of aminopropyl-terminated polydimethylsiloxane prepared according to the above description with 2.8 g (0.02 mole) of vinyldimethylazlactone (VDM), prepared as previously described in U.S. Patent No. 4,777,276 (Rasmussen et al.), at room temperature.

The viscosity of the reaction mixture increased as the reaction progressed. The number average molecular weight of the difunctional polysiloxane was determined by acid titration of the precursor and was confirmed by gel permeation chromatography (GPC) analysis before and after capping with VDM.

### 5K, 10K, 20K MAUS

Other free-radically polymerizable siloxanes were prepared by reacting the 5,000 number average molecular weight aminopropyl-terminated polydimethylsiloxane prepared according to the above-described method with other capping agents, such as with isocyanatoethyl methacrylate, commercially available from Showa Rhodia, at room temperature to form polysiloxanes with methacryloxyurea (5K MAUS) groups on both ends.

10K MAUS and 20K MAUS were prepared by using aminopropyl terminated polydimethyl siloxane precursors with number average molecular weights of 10,000 and 20,000 respectively, prepared according to the above described procedure.

### 10K SiMAC

A methacrylate-terminated polydimethylsiloxane polymeric monomer having a number average molecular weight of about 10,000 was prepared using n-butyllithium (BuLi) as the initiator. A flame-dried 1000 ml three-necked flask equipped with a mechanical stirrer, condenser, and septum and purged with a dry argon was charged with a dilute solution of hexamethylcyclotrisiloxane (D₃) (1 g) in heptane (100 ml), both freshly dried. 5.5 ml of BuLi (1.7 M in hexane) (9.35 mmoles) was introduced and the initiation reaction was continued overnight at room temperature. Next 99.4g (0.44 mole) of D₃ in THF (248.4 g) was introduced into the reaction flask via Teflon® polytetrafluoroethylene (PTFE) tubing (available from DuPont) and the polymerization was continued for 8 hours with the reaction mixture maintained at room temperature. Progress of the reaction was monitored by gas chromatography (GC) analysis of the reaction mixture. Thereafter the capping agent, 3-methacryloxypropyl dimethylchlorosilane (2.26 g, 10.3 mmoles), was introduced and the reaction mixture was stirred for 1 hour, while additionally agitated with an ultrasonic bath which raised the temperature to about 40°C.

The resultant polymer was added to a large excess of methanol, and the separated polymer layer was dissolved in ethyl ether and washed with water. The organic layer was dried with magnesium sulfate, filtered, and evaporated. The resultant polymer did not contain detectable quantities of low molecular weight materials, such as oligomeric siloxanes.

### Preparation of IEM Functionalized Triblock

Into a 250 ml round-bottomed flask equipped with a magnetic stirring bar was charged 53.1 g (20 mmole) hydroxyl terminated poly(ethylene oxide) -poly(dimethysiloxane) triblock available from Dow Corning under the trade name Q4-3667, 100 ml of methylene chloride, 6.2 g (40 mmole) isocyanatoethyl methacrylate, and 0.1 g dibutyltin dilaurate. The head space was purged with nitrogen, a reflux condenser was attached, and the resulting mixture heated to reflex at atmospheric pressure under nitrogen. After 4 hours no isocyanate was detected by infrared spectroscopy. The resulting solution was cooled and stripped of solvent on a rotary evaporator to yield the triblock functionalized with methacrylate groups.

The vinyl monomers used in preparation of the silicone modified PSAs described in the Examples below are listed below along with their source.

| MONOMERS | | |
|---|---|---|
| Abbrev. | Monomer | Source |
| AA | acrylic acid | Rohm and Haas |
| IOA | isooctyl acrylate | 1 |
| NVP | N-vinyl pyrrolidone | GAF |
| HDDA | 1,6-hexanediol diacrylate | Sartomer |
| 1) Prepared by esterification of isooctyl alcohol (Exxon) with acrylic acid. | | |

### Preparation by First Method

### Examples 1 through 4 and Comparative Examples 1 and 2

A mixture of 67.5 g of isooctyl acrylate (IOA), 7.5 g of N-vinyl pyrrolidone (NVP), and 44.6 mg 2,2-dimethoxy-2-phenylacetophenone was purged 5 minutes with nitrogen and syruped under low intensity UV to yield a 545 centipoise viscosity solution. 61.8 mg additional 2,2-dimethoxy-2-phenylacetophenone was added and 5 g of this solution was formulated with 0.25 g of 5,000, 10,000, and 20,000 number average molecular weight MAUS (Examples 1-3, respectively); 5,000 number average molecular weight ACMAS (Example 4); or 10,000 number average molecular weight SiMAC (Comparative Example 2); where MAUS is difunctional methacryloxyurea siloxane, ACMAS is difunctional acrylamidoamido siloxane, and SiMAC is the monofunctional methacrylate terminated siloxane run for comparison. Preparation of these materials has been described previously. These formulations were all clear except for the one containing 20,000 number average molecular weight MAUS which was hazy. They were knife coated 0.025 mm thick onto primed PET with a siliconized PET overleaf and cured under low intensity UV lights for 5 minutes. The starting IOA/NVP syrup with no added silicone was coated and cured in similar fashion (Comparative Example 1). The liner was stripped from the resulting tape, which was conditioned open-faced in a constant temperature room (22°C and 50 percent RH) overnight. Finger appeal was assessed, and peel adhesion was run from glass using an I-mass peel tester (180° peel). Results are shown in Table I.

**TABLE I**

| Example | Added Silicone | Tack¹ | Peel from Glass (N/100 mm) | |
|---|---|---|---|---|
| | | | Initial | Aged* |
| Comparative 1 | NONE | gd-exc | 61 | 53 |
| 1 | 5% 5K MAUS | gd-exc | 26 | 28 |
| 2 | 5% 10K MAUS | gd-exc | 20 | 26 |
| 3 | 5% 20K MAUS | med-gd | 15 | 24 |
| 4 | 5% 5K ACMAS | med-gd | 13 | 11 |
| Comparative 2 | 5 % 10K SiMAC | med-gd | 13 | 46 |

| | | | | |
|---|---|---|---|---|
| *one day dwell at room temperature. | | | | |
| ¹med = medium, gd = good, exc = excellent | | | | |

As can be seen from these results, the molecular weight and nature of the functional group affects the peel to some extent, and while the monofunctional silicone tripled adhesion in one day at room temperature up to the level with no silicone added, none of the difunctional materials have even doubled in adhesion staying below the control.

### Examples 5 through 12, Comparative Examples 3 through 5

These examples show the effect of varying the amount of 5K MAUS or IEM functionalized triblock in combination with HDDA, a low molecular weight diacrylate crosslinker; in the IOA/NVP syrup used in Examples 1 through 4, and contrast it with the starting IOA/NVP syrup with added HDDA but no added silicone. Compounding, coating and curing was done as described in Examples 1 through 4. Immediate peel was measured from glass, with both immediate and aged peel tested from bond paper. Results are shown in Table II and demonstrate that addition of low molecular weight crosslinker has a synergistic effect.

**TABLE II**

| Peel Adhesion (N/100 mm) | | | | | |
|---|---|---|---|---|---|
| Example | Added Silicone | % HDDA | From Glass | From Paper* | |
| | | | | Immed | Aged** |
| Comp. 3 | None | 0 | 42 | 11 (100%) | --- |
| Comp. 4 | None | 0.2 | 39 | 8.5 (100%) | 8.3 (100%) |
| Comp. 5 | None | 0.5 | 33 | 19 (50%) | 7.9 (100%) |
| 5 | 2% MAUS | 0.2 | 26 | 9.0 (100%) | 7.9 (90%) |
| 6 | 2% MAUS | 0.5 | 15 | 10.5 (40%) | 9.0 (100%) |
| 7 | 5% MAUS | 0.2 | 13 | 9.9 (40%) | 9.0 (50%) |
| 8 | 5% MAUS | 0.5 | 13 | 11 (40%) | 10.3 (sl)*** |
| 9 | 2% Triblk | 0.2 | 2.8 | 20 (0%) | 7.7 (50%) |
| 10 | 2% Triblk | 0.5 | 1.5 | 12 (0%) | 18 (40%) |
| 11 | 5% Triblk | 0.2 | 1.1 | 2.8 (0%) | 6.1 (0%) |
| 12 | 5% Triblk | 0.5 | 1.1 | 3.1 (0%) | 7.0 (0%) |

| | | | | | |
|---|---|---|---|---|---|
| * Given percentages represent amount of fiber transfer observed in terms of coverage of adhesive surface. Note that at 100%, peel test value is only a measure of internal paper strength. | | | | | |
| ** three day dwell at room temperature | | | | | |
| *** sl = slight, less than 20% delamination | | | | | |

### Examples 13 through 16

Following the procedure of Examples 1 through 4, a syrup consisting of 90 parts isooctyl acrylate, 10 parts acrylic acid, 0.15 part 2,2-dimethoxy-2-phenylacetophenone initiator and 0.10 part HDDA was prepared and formulated with 2.9, 5.7, 8.2, and 10.7% RC705 (Examples 13 through 16 respectively). The resulting solutions were coated and cured following the procedure set forth in the 90° peel adhesion test method. The coating thickness was 0.4 mm. Adhesion from steel, both initially and after a 3 day dwell, was tested as was initial peel from bond paper. Results are shown in Table m and demonstrate the ability to tailor the adhesion level by the amount of coreactive siloxane added, as well as the use of acrylic acid monomer.

**TABLE III**

| Peel Adhesion (N/100 mm) | | | | |
|---|---|---|---|---|
| | Added RC705 | Steel | | Paper |
| | | Initial | Aged* | |
| Example 13 | 2.9% | 90 | 104 | 88 (paper split) |
| Example 14 | 5.7% | 62 | 61 | 42 |
| Example 15 | 8.2% | | | 23 |
| Example 16 | 10.7% | | | 3.1 |

| | | | | |
|---|---|---|---|---|
| * three day dwell at room temperature | | | | |

### Preparation by Second Method

A 90/10 IOA/NVP solution polymer containing 0.5 percent 4-acryloxy benzophenone (ABP) was prepared by charging 180 g IOA, 20 g NVP, 1.0 g ABP, 90 g isopropanol, 210 g ethyl acetate, and 0.5 g azobisisobutyronitrile initiator into a quart bottle, purging the headspace with nitrogen, sealing, and tumbling in a constant temperature bath (55°C) overnight. The resulting polymer (inherent viscosity 0.18 dl/g (EtOAc, 25°)) was formulated with varying levels of triblock polymer, knife coated onto PET at 0.025 mm dry coating weight and dried (10 min at 65°C), then cured in a PPG Industries UV Processor (3 passes at 23 meters per minute under air atmosphere - dose 300 mJ/cm²). After conditioning overnight in the constant temperature room, testing was conducted as described above. Results are presented in Table IV.

**TABLE IV**

| | | Peel from Paper (N/100 mm)* | |
|---|---|---|---|
| Example | Added Triblock | Initial | Aged** |
| Comp. Ex. 6 | 0% | 14 (100%) | --- |
| Ex. 17 | 2% | 3.7 (0%) | 8.5 (0%) |
| Ex. 18 | 5% | 2.4 (0%) | 8.5 (0%) |
| Ex. 19 | 10% | 2.2 (0%) | 10.1(0%) |

| | | | |
|---|---|---|---|
| * Given percentages represent amount of fiber transfer observed in terms of coverage of adhesive surface. | | | |
| ** three day dwell at room temperature. | | | |

While this invention has been described in connection with specific embodiments, it should be understood that it is capable of further modification. The claims herein are intended to cover those variations which one skilled in the art would recognize as the chemical equivalent of what has been described here.

## Claims

1. A radiation cured acrylate pressure sensitive adhesive composition modified with 1 to 10 weight percent of coreacted siloxane, said siloxane represented by the formula 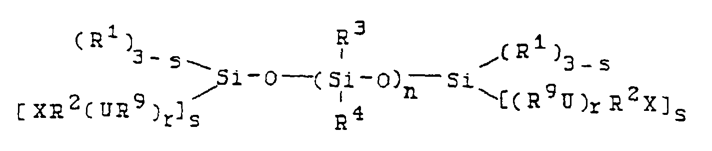 wherein
R¹ are monovalent moieties which can be the same or different selected from the group consisting of alkyl, substituted alkyl, aryl, and substituted aryl;
R² are divalent linking groups which can be the same or different;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups; and
wherein said radiation cured acrylate pressure sensitive adhesive composition has improved removability relative to the same composition cured without the coreactive multifunctional siloxane present.

2. The composition of claim 1 wherein s = 1; r = 0;
R³ are monovalent moieties which can be the same or different selected from the group consisting of alkyl, substituted alkyl, aryl, and substituted aryl;
R⁴ are monovalent moieties which can be the same or different selected from the group consisting of alkyl, substituted alkyl, aryl, and substituted aryl;
R² is represented by the structure 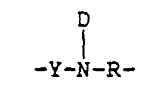
wherein Y are divalent linking groups which can be the same or different and which serve to activate X toward free radical polymerization;
D are monovalent moieties which can be the same or different selected from the group consisting of hydrogen, alkyl groups comprising 1 to 10 carbon atoms, aryl, and substituted aryl; and
R are divalent hydrocarbon groups which can be the same or different.

3. The composition of claim 2 wherein
when X comprises CH₂=CH- then
Y comprises 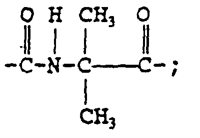 and 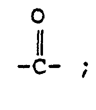
D comprises H;
R comprises -CH₂CH₂CH₂-; and
R¹, R³, and R⁴ each comprise -CH₃.
and further wherein
when X comprises 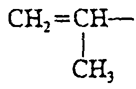 then
Y is selected from the group consisting of 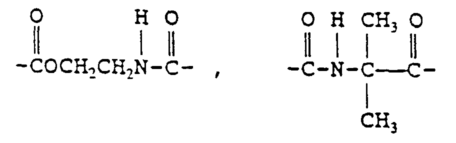 and 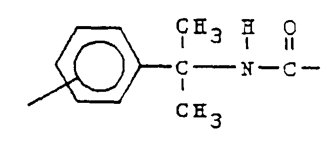
D comprises -H;
R comprises -CH₂CH₂CH₂-; and
R¹, R³, and R⁴ each comprise -CH₃.

4. The composition of claim 1 wherein s = 0;
R¹ are monovalent moieties which can be the same or different selected from the group consisting of alkyl, substituted alkyl, aryl, and substituted aryl;
R³ are monovalent moieties which can be the same or different selected from the group consisting of alkyl, substituted alkyl, aryl, and substituted aryl; and
at least two of the R⁴ moieties are -R²X.

5. The composition of Claim 1 wherein
s = 1;
r = 1;
R¹, R³, R⁴ each represent methyl groups;
U represents the structure -(CH₂CH₂O)ₘ-,
wherein m is an integer of from 10 to 180;
-R⁹- is a divalent hydrocarbon linking group;
X represents the structure 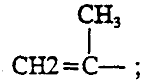 and
R² represents the structure

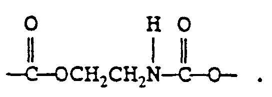

6. A method of making the composition of claim 1 comprising the steps of
(a) forming a homogeneous mixture comprising:
(i) 1 to 10 weight percent of a coreactive, multifunctional siloxane represented by the formula 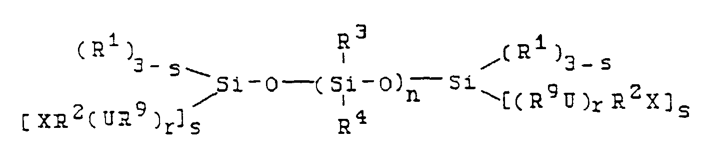 wherein
R¹ are monovalent moieties which can be the same or different selected from the group consisting of alkyl, substituted alkyl, aryl, and substituted aryl;
R² are divalent linking groups which can be the same or different;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), polypropylene oxide), poly(1,2-butylene oxide), and poly(tetramethylene oxide), wherein said polyether segments range in number average molecular weight 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups; and
(ii) 65 to 99 weight percent of monofunctional free radically poiymerizable vinyl monomer which is capable of copolymerizing with said siloxane wherein said free radically poiymerizable vinyl monomer is selected from the group consisting of acrylic acid, methacrylic acid, esters of acrylic acid comprising 4 to 21 carbon atoms, esters of methacrylic acid comprising 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof; and
(iii) 0.1 to 5 weight percent of a photoinitiator;
wherein the weight percentages are based upon the total weight of the homogeneous mixture; and
(b) polymerizing said mixture by exposure to low intensity ultraviolet radiation in the absence of oxygen and solvent.

7. A method of making the composition of claim 1 comprising the steps of:
(a) forming a homogeneous mixture comprising:
(i) 1 to 10 weight percent of coreactive multifunctional siloxane represented by the formula 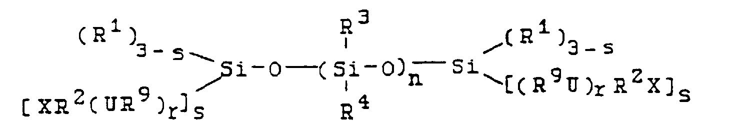 wherein
R¹ are monovalent moieties which can be the same or different selected from the group consisting of alkyl, substituted alkyl, aryl, and substituted aryl;
R² are divalent linking groups which can be the same or different;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups; and
(ii) 70 to 99 weight percent of acrylate copolymer comprised of monofunctional free radically polymerizable vinyl monomers and monoethylenically unsaturated aromatic ketone monomers;
wherein said vinyl monomers are selected from the group consisting of acrylic acid, methacrylic acid, esters of acrylic acid comprising 4 to 21 carbon atoms, esters of methacrylic acid comprising 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof,
and said aromatic ketone monomer has the formula: 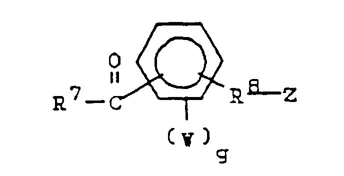 wherein
R⁷ is selected from the group consisting of alkyl groups comprising 1 to 4 carbon atoms and phenyl wherein R⁷ may be optionally substituted with one or more substituents selected from the group consisting of halogen atoms, alkoxy groups, and hydroxyl groups, further provided that when R⁷ is phenyl substituted with one or more hydroxyl groups, any such hydroxyl group(s) must be meta or para to the aromatic carbonyl;
W is selected from the group consisting of halogen, alkoxy, and hydroxyl groups, provided that when W is a hydroxyl group, W must be situated meta or para to the aromatic carbonyl;
g is an integer ranging from 0 to 4;
R⁸ is a divalent linking group; and
Z is selected from the group consisting of alkenyl groups and ethylenically unsaturated acyl groups, said aromatic ketone monomer comprising from 0.025 percent to 0.5 percent by weight of said copolymer and the degree of polymerization of said copolymer being such that said copolymer has an inherent viscosity of from 0.15 dl/g to 1.4 dl/g before crosslinking; wherein the weight percentages of said siloxane and said copolymer are based upon the total weight of the homogeneous mixture; and
(b) curing said mixture by exposure to medium or high intensity ultraviolet radiation in the absence of solvent.

8. A flexible sheet coated on at least a portion of at least one major surface with the adhesive of Claim 1.

9. A radiation curable pressure sensitive adhesive composition comprising:
a homogeneous mixture comprising:
(i) 1 to 10 weight percent of a siloxane represented by the formula 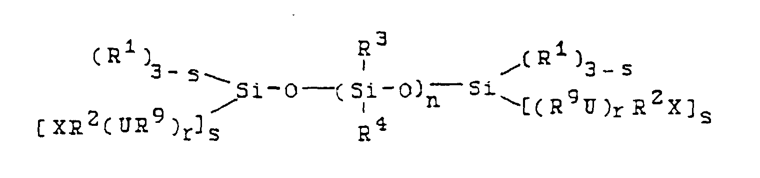 wherein
R¹ are monovalent moieties which can be the same or different selected from the group consisting of alkyl, substituted alkyl, aryl, and substituted aryl;
R² are divalent linking groups which can be the same or different;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups;
(ii) 65 to 99 weight percent of monofunctional free radically polymerizable vinyl monomer which is capable of copolymerizing with said siloxane wherein said free radically polymerizable vinyl monomer is selected from the group consisting of acrylic acid, methacrylic acid, esters of acrylic acid comprising 4 to 21 carbon atoms, esters of methacrylic acid comprising from 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof; and
(iii) 0.1 to 5 weight percent of a photoinitiator.

10. A radiation curable pressure sensitive adhesive composition comprising:
a homogeneous mixture comprising:
(i) 1 to 10 weight percent of a coreactive multifunctional siloxane, said siloxane represented by the formula 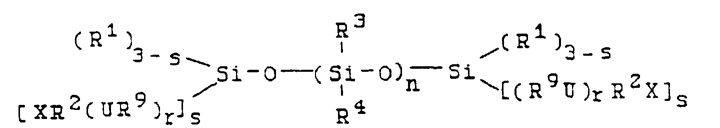 wherein
R¹ are monovalent moieties which can be the same or different selected from the group consisting of alkyl, substituted alkyl, aryl, and substituted aryl;
R² are divalent linking groups which can be the same or different;
R³ are monovalent moieties which can independently be the same or different and are selected from the group consisting of alkyl, substituted alkyl, aryl, substituted aryl, and -R²X;
R⁴ are monovalent moieties which can independently be the same or different and are selected from the group consisting of alkyl, substituted alkyl, aryl, substituted aryl, and -R²X;
X are monovalent moieties having ethylenic unsaturation which can be the same or different;
U are divalent moieties which can be the same or different comprising a polyether segment selected from the group consisting of poly(ethylene oxide), poly(propylene oxide), poly(1,2-butylene oxide), and poly(tetramethylene oxide), wherein said polyether segments range in number average molecular weight from 400 to 10,000;
R⁹ are divalent linking groups which can be the same or different;
n is an integer of 15 to 300;
r is an integer of 0 to 1; and
s is an integer of 0 to 3;
wherein said siloxane has an average of at least two -R²X groups; and
(ii) 70 to 99 weight percent of an acrylate copolymer comprised of monofunctional free radically polymerizable vinyl monomers and monoethylenically unsaturated aromatic ketone monomer;
wherein said vinyl monomers are selected from the group consisting of acrylic acid, methacrylic acid, esters of acrylic acid comprising 4 to 21 carbon atoms, esters of methacrylic acid comprising from 5 to 22 carbon atoms, acrylamide, substituted acrylamides, styrene, substituted styrenes, acrylonitrile, methacrylonitrile, N-vinyl pyrrolidone, N-vinyl caprolactam, vinylidene chloride, vinyl esters of carboxylic acids, and mixtures thereof,
and wherein said aromatic ketone monomer has the formula: 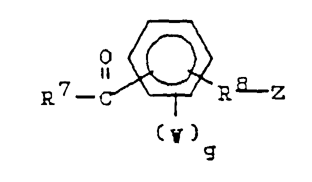
wherein R⁷ is selected from the group consisting of alkyl groups comprising 1 to 4 carbon atoms and phenyl, provided that R⁷ may be optionally substituted with one or more substituents selected from the group consisting of halogen atoms, alkoxy groups, and hydroxyl groups, further provided that when R⁷ is phenyl substituted with one or more hydroxyl groups, any such hydroxyl groups must be meta or para to the aromatic carbonyl, W is selected from the group consisting of halogen, alkoxy, and hydroxyl groups, provided that when W is a hydroxyl group, that W must be meta or para to the aromatic carbonyl, g is an integer of from 0 to 4, R⁸ is a divalent linking group, and Z is selected from the group consisting of alkenyl groups and ethylenically unsaturated acyl groups, said aromatic ketone monomer comprising from 0.025 percent to 0.5 percent by weight of said copolymer and the degree of polymerization of said copolymer being such that said copolymer has an inherent viscosity of from 0.15 dl/g to 1.4 dl/g before crosslinking.

## Patentansprüche

1. Strahlungsgehärtete Acrylat-Haftklebemasse modifiziert mit 1 bis 10 Gew.-% mitumgesetzten Siloxans der Formel 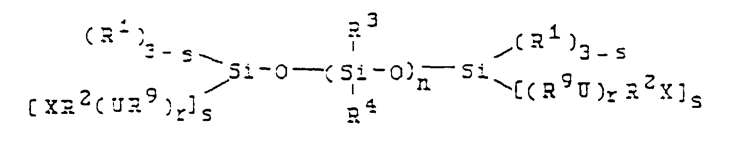 in der
R¹ einwertige Einheiten sind, die gleich oder verschieden sein können, ausgewählt aus der Gruppe Alkyl-, substituierte Alkyl-, Aryl- und substituierte Arylreste; R² zweiwertige Verbindungsgruppen sind, die gleich oder verschieden sein können;
R³ einwertige Einheiten sind, die unabhängig voneinander gleich oder verschieden sein können, ausgewählt aus der Gruppe Alkyl-, substiuierte Alkyl-, Aryl- und substituierte Arylreste und Reste -R²X;
R⁴ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
X einwertige ethylenisch ungesättigte Einheiten sind, die gleich oder verschieden sein können;
U zweiwertige Einheiten sind, die gleich oder verschieden sein können und ein Polyethersegment umfassen, ausgewählt aus der Gruppe Poly(ethylenoxid), Poly(propylenoxid), Poly(1,2-butylenoxid) und Poly(tetramethylenoxid), wobei die Polyethersegmente im Zahlenmittel des Molekulargewichts von 400 bis 10000 reichen;
R⁹ zweiwertige Verbindungsgruppen sind, die gleich oder verschieden sein können;
n eine ganze Zahl von 15 bis 300 ist;
r eine ganze Zahl von 0 bis 1 ist; und
s eine ganze Zahl von 0 bis 3 ist;
wobei das Siloxan im Mittel wenigstens zwei Gruppen -R²X aufweist; und
wobei die strahlungsgehärtete Acrylat-Haftklebemasse im Vergleich zur gleichen Zusammensetzung, die ohne das mitumsetzbare multifunktionelle Siloxan gehärtet wurde, eine verbesserte Entfernbarkeit aufweist.

2. Zusammensetzung nach Anspruch 1, wobei s = 1; r = 0; R³ einwertige Einheiten sind, die gleich oder verschieden sein können, ausgewählt aus der Gruppe Alkyl-, substituierte Alkyl-, Aryl- und substituierte Arylreste; R⁴ einwertige Einheiten sind, die gleich oder verschieden sein können, ausgewählt aus der Gruppe Alkyl-, substituierte Alkyl-, Aryl- und substituierte Arylreste; R² die Struktur hat 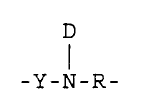 wobei Y zweiwertige Verbindungsgruppen sind, die gleich oder verschieden sein können und die dazu dienen, X für die Radikalpolymerisation zu aktivieren;
D einwertige Einheiten sind, die gleich oder verschieden sein können, ausgewählt aus der Gruppe Wasserstoffatom, Alkylreste umfassend 1 bis 10 Kohlenstoffatome, Aryl- und substituierte Arylreste; und
R zweiwertige Kohlenwasserstoffreste sind, die gleich oder verschieden sein können.

3. Zusammensetzung nach Anspruch 2, wobei im Falle, daß X CH₂=CH- umfaßt, Y 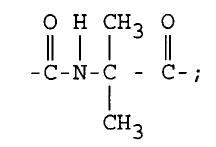 und 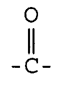 umfaßt;
D H umfaßt;
R -CH₂CH₂CH₂- umfaßt und
R¹, R³ und R⁴ jeweils -CH₃ umfassen
und des weiteren, im Falle, daß X 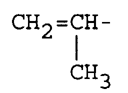 umfaßt, Y eine Verbindung ausgewählt aus der Gruppe 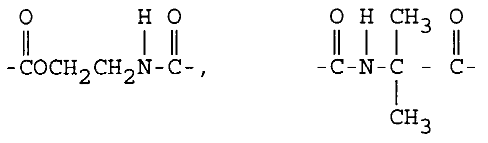 und 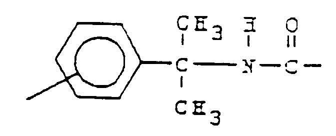 ist,
D -H umfaßt;
R -CH₂CH₂CH₂- umfaßt; und
R¹, R³ und R⁴ jeweils -CH₃ umfassen.

4. Zusammensetzung nach Anspruch 1, wobei s = 0 ist; R¹ einwertige Einheiten sind, die gleich oder verschieden sein können, ausgewählt aus der Gruppe Alkyl-, substituierte Alkyl-, Aryl- und substituierte Arylreste; R³ einwertige Einheiten sind, die gleich oder verschieden sein können, ausgewählt aus der Gruppe Alkyl-, substituierte Alkyl-, Aryl- und substituierte Arylreste; und
wenigstens zwei der R⁴-Einheiten die Reste -R²X sind.

5. Zusammensetzung nach Anspruch 1, wobei
s = 1;
r = 1;
R¹, R³ und R⁴ jeweils Methylgruppen sind;
U die Struktur -(CH₂CH₂O)ₘ- hat,
wobei m eine ganze Zahl von 10 bis 180 ist;
-R⁹- eine zweiwertige Kohlenwasserstoffverbindungsgruppe ist;
X die Struktur 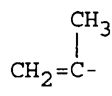 hat; und
R₂ die Struktur 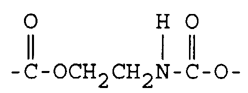 hat.

6. Verfahren zur Herstellung der Zusammensetzung nach Anspruch 1, das die Schritte umfaßt:
(a) Bildung eines homogenen Gemisches umfassend:
(i) 1 bis 10 Gew.-% eines mitumsetzbaren multifunktionellen Siloxans der Formel 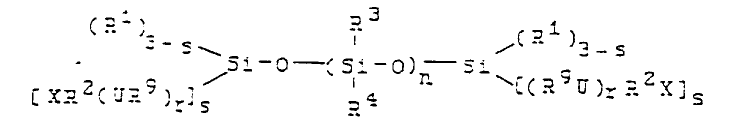 wobei
R¹ einwertige Einheiten sind, die gleich oder verschieden sein können, ausgewählt aus der Gruppe Alkyl-, substituierte Alkyl-, Aryl- und substituierte Arylreste;
R² zweiwertige Verbindungsgruppen sind, die gleich oder verschieden sein können;
R³ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
R⁴ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
X einwertige ethylenisch ungesättigte Einheiten sind, die gleich oder verschieden sein können;
U zweiwertige Einheiten sind, die gleich oder verschieden sein können und ein Polyethersegment umfassen, ausgewählt aus der Gruppe Poly(ethylenoxid), Poly(propylenoxid), Poly(1,2-butylenoxid) und Poly(tetramethylenoxid), wobei die Polyethersegmente im Zahlenmittel des Molekulargewichts von 400 bis 10 000 reichen;
R⁹ zweiwertige Verbindungsgruppen sind, die gleich oder verschieden sein können;
n eine ganze Zahl von 15 bis 300 ist;
r eine ganze Zahl von 0 bis 1 ist; und
s eine ganze Zahl von 0 bis 3 ist;
wobei das Siloxan im Mittel wenigstens zwei Gruppen -R²X aufweist; und
(ii) 65 bis 99 Gew.-% eines monofunktionellen radikalisch polymerisierbaren Vinylmonomers, das mit dem Siloxan copolymerisiert werden kann, wobei das radikalisch polymerisierbare Vinylmonomer aus der Gruppe Acrylsäure, Methacrylsäure, Ester der Acrylsäure umfassend 4 bis 21 Kohlenstoffatome, Ester der Methacrylsäure umfassend 5 bis 22 Kohlenstoffatome, Acrylamid, substituierte Acrylamide, Styrol, substituierte Styrole, Acrylnitril, Methacrylnitril, N-Vinylpyrrolidon, N-Vinylcaprolactam, Vinylidenchlorid, Vinylester von Carbonsäuren und Gemischen davon ausgewählt ist; und
(iii) 0,1 bis 5 Gew.-% eines Photoinitiators; wobei sich die Gewichtsprozente auf das Gesamtgewicht des homogenen Gemisches beziehen; und
(b) Polymerisierung des Gemisches durch Einwirkung von intensitätsschwacher ultravioletter Strahlung in Abwesenheit von Sauerstoff und eines Lösungsmittels.

7. Verfahren zur Herstellung der Zusammensetzung nach Anspruch 1, das die Schritte umfaßt:
(a) Bildung eines homogenen Gemisches umfassend:
(i) 1 bis 10 Gew.-% eines mitumsetzbaren multifunktionellen Siloxans der Formel 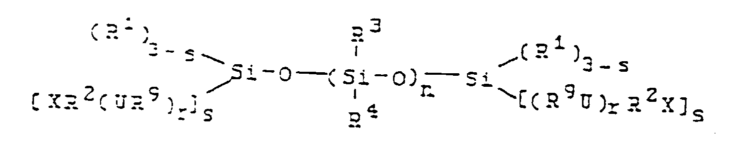 wobei
R¹ einwertige Einheiten sind, die gleich oder verschieden sein können, ausgewählt aus der Gruppe Alkyl-, substituierte Alkyl-, Aryl- und substituierte Arylreste;
R² zweiwertige Verbindungsgruppen sind, die gleich oder verschieden sein können;
R³ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
R⁴ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
X einwertige ethylenisch ungesättigte Einheiten sind, die gleich oder verschieden sein können;
U zweiwertige Einheiten sind, die gleich oder verschieden sein können und ein Polyethersegment umfassen, ausgewählt aus der Gruppe Poly(ethylenoxid), Poly(propylenoxid), Poly(1,2-butylenoxid) und Poly(tetramethylenoxid),
wobei die Polyethersegmente im Zahlenmittel des Molekulargewichts von 400 bis 10 000 reichen;
R⁹ zweiwertige Verbindungsgruppen sind, die gleich oder verschieden sein können;
n eine ganze Zahl von 15 bis 300 ist;
r eine ganze Zahl von 0 bis 1 ist; und
s eine ganze Zahl von 0 bis 3 ist;
wobei das Siloxan im Mittel wenigstens zwei Gruppen -R²X aufweist; und
(ii) 70 bis 99 Gew.-% eines Acrylatcopolymers, das monofunktionelle radikalisch polymerisierbare Vinylmonomere und monoethylenisch ungesättigte aromatische Ketonmonomere umfaßt,
wobei die Vinylmonomere aus der Gruppe Acrylsäure, Methacrylsäure, Ester der Acrylsäure umfassend 4 bis 21 Kohlenstoffatome, Ester der Methacrylsäure umfassend 5 bis 22 Kohlenstoffatome, Acrylamid, substituierte Acrylamide, Styrol, substituierte Styrole, Acrylnitril, Methacrylnitril, N-Vinylpyrrolidon, N-Vinylcaprolactam, Vinylidenchlorid, Vinylester von Carbonsäuren und Gemischen davon ausgewählt sind; und
das aromatische Ketonmonomere die Formel hat: 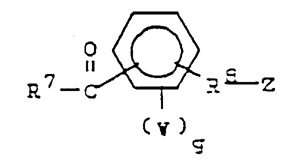
wobei R⁷ aus der Gruppe Alkylreste umfassend 1 bis 4 Kohlenstoffatome und Phenyl ausgewählt ist, wobei R⁷ gegebenenfalls mit einem oder mehreren Substituenten, ausgewählt aus der Gruppe Halogenatome, Alkoxyreste und Hydroxylgruppen, substituiert ist mit der weiteren Maßgabe, daß, wenn R⁷ ein mit einer oder mehreren Hydroxylgruppen substituierter Phenylrest ist, jede der Hydroxylgruppen in meta- oder para-Position zum aromatischen Carbonylrest sein muß;
W aus der Gruppe Halogenatom, Alkoxyrest und Hydroxylgruppen ausgewählt ist mit der Maßgabe, daß, wenn W eine Hydroxylgruppe ist, W in meta- oder para-Position zum aromatischen Carbonylrest sein muß;
g eine ganze Zahl zwischen 0 und 4 ist:
R⁸ eine zweiwertige Verbindungsgruppe ist; und
Z ausgewählt ist aus der Gruppe Alkenylreste und ethylenisch ungesättigte Acylgruppen; wobei das aromatische Ketonmonomer 0,025 bis 0,5 Gew.-% des Copolymers umfaßt und der Polymerisationsgrad des Copolymers so ist, daß das Copolymer eine logarithmische Viskositätszahl von 0,15 dl/g bis 1,4 dl/g vor der Vernetzung hat; wobei die Gewichtsprozente des Siloxans und des Copolymers auf das Gesamtgewicht des homogenen Gemisches bezogen sind; und
(b) Härten des Gemisches, durch Einwirkung von mittel bis stark intensiver ultravioletter Strahlung in Abwesenheit eines Lösungsmittels.

8. Biegsames Blatt, das mit mindestens einem Teil mindestens einer Hauptoberfläche mit dem Kleber nach Anspruch 1 beschichtet ist.

9. Strahlungshärtbare Haftklebemasse, die umfaßt: ein homogenes Gemisch, umfassend:
(i) 1 bis 10 Gew.-% eines Siloxans der Formel 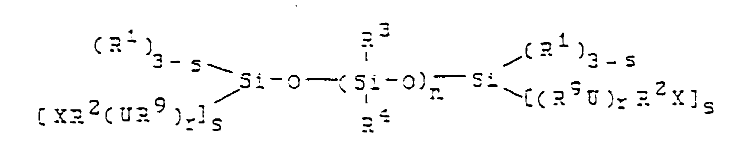 wobei
R¹ einwertige Einheiten sind, die gleich oder verschieden sein können, ausgewählt aus der Gruppe Alkyl-, substituierte Alkyl-, Aryl- und substituierte Arylreste;
R² zweiwertige Verbindungsgruppen sind, die gleich oder verschieden sein können;
R³ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
R⁴ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
X einwertige ethylenisch ungesättigte Einheiten sind, die gleich oder verschieden sein können; U zweiwertige Einheiten sind, die gleich oder verschieden sein können und ein Polyethersegment umfassen, ausgewählt aus der Gruppe Poly(ethylenoxid), Poly(propylenoxid), Poly(1,2-butylenoxid) und Poly(tetramethylenoxid), wobei die Polyethersegmente im Zahlenmittel des Molekulargewichts von 400 bis 10 000 reichen;
R⁹ zweiwertige Verbindungsgruppen sind, die gleich oder verschieden sein können;
n eine ganze Zahl von 15 bis 300 ist;
r eine ganze Zahl von 0 bis 1 ist; und
s eine ganze Zahl von 0 bis 3 ist;
wobei das Siloxan im Mittel wenigstens zwei Gruppen -R²X aufweist; und
(ii) 65 bis 99 Gew.-% eines monofunktionellen radikalisch polymerisierbaren Vinylmonomers, das mit dem Siloxan copolymerisiert werden kann, wobei das radikalisch polymerisierbare Vinylmonomer aus der Gruppe Acrylsäure, Methacrylsäure, Ester der Acrylsäure umfassend 4 bis 21 Kohlenstoffatome, Ester der Methacrylsäure umfassend 5 bis 22 Kohlenstoffatome, Acrylamid, substituierte Acrylamide, Styrol, substituierte Styrole, Acrylnitril, Methacrylnitril, N-Vinylpyrrolidon, N-Vinylcaprolactam, Vinylidenchlorid, Vinylester von Carbonsäuren und Gemischen davon ausgewählt ist; und
(iii) 0,1 bis 5 Gew.-% eines Photoinitiators.

10. Strahlungshärtbare Haftklebemasse, die umfaßt:
ein homogenes Gemisch, umfassend:
(i) 1 bis 10 Gew.-% eines mitumsetzbaren multifunktionellen Siloxans mit der Formel 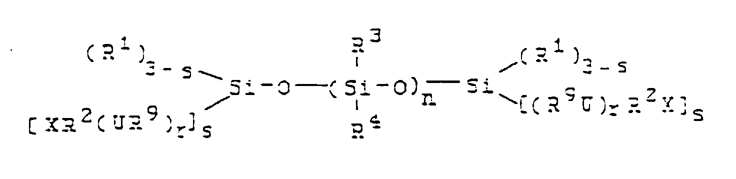 wobei
R¹ einwertige Einheiten sind, die gleich oder verschieden sein können, ausgewählt aus der Gruppe Alkyl-, substituiertes Alkyl-, Aryl- und substituierte Arylreste;
R² zweiwertige Verbindungsgruppen sind, die gleich oder verschieden sein können;
R³ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
R⁴ einwertige Einheiten sind, die unabhängig voneinander gleich oder verschieden sein können, ausgewählt aus der Gruppe Alkyl-, substituierte Alkyl-, Aryl- und substituierte Arylreste und Reste -R²X;
X einwertige ethylenisch ungesättigte Einheiten sind, die gleich oder verschieden sein können;
U zweiwertige Einheiten sind, die gleich oder verschieden sein können und ein Polyethersegment umfassen, ausgewählt aus der Gruppe Poly(ethylenoxid), Poly(propylenoxid), Poly(1,2-butylenoxid) und Poly(tetramethylenoxid), wobei die Polyethersegmente im Zahlenmittel des Molekulargewichts von 400 bis 10 000 reichen;
R⁹ zweiwertige Verbindungsgruppen sind, die gleich oder verschieden sein können;
n eine ganze Zahl von 15 bis 300 ist;
r eine ganze Zahl von 0 bis 1 ist; und
s eine ganze Zahl von 0 bis 3 ist;
wobei das Siloxan im Mittel wenigstens zwei Gruppen -R²X aufweist; und
(ii) 70 bis 99 Gew.-% eines Acrylatcopolymers, das monofunktionelle radikalisch polymerisierbare Vinylmonomere und monoethylenisch ungesättigte aromatische Ketonmonomere umfaßt;
wobei die Vinylmonomere aus der Gruppe Acrylsäure, Methacrylsäure, Ester der Acrylsäure umfassend 4 bis 21 Kohlenstoffatome, Ester der Methacrylsäure umfassend 5 bis 22 Kohlenstoffatome, Acrylamid, substituierte Acrylamide, Styrol, substituierte Styrole, Acrylnitril, Methacrylnitril, N-Vinylpyrrolidon, N-Vinylcaprolactam, Vinylidenchlorid, Vinylester von Carbonsäuren und Gemischen davon ausgewählt sind; und
wobei das aromatische Ketonmonomere die Formel hat: 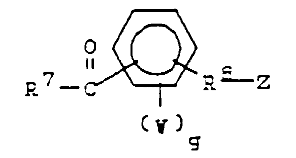
wobei R⁷ aus der Gruppe Alkylreste umfassend 1 bis 4 Kohlenstoffatome und Phenyl ausgewählt ist mit der Maßgabe, daß R⁷ gegebenenfalls mit einem oder mehreren Substituenten, ausgewählt aus der Gruppe Halogenatome, Alkoxyreste und Hydroxylgruppen, substituiert wird, und mit der weiteren Maßgabe, daß, wenn R⁷ ein mit einer oder mehreren Hydroxylgruppen substituierter Phenylrest ist, jede der Hydroxylgruppen in meta- oder para-Position zum aromatischen Carbonylrest sein muß;
W aus der Gruppe Halogenatom, Alkoxyreste und Hydroxylgruppen ausgewählt ist mit der Maßgabe, daß, wenn W eine Hydroxylgruppe ist, W in meta- oder para-Position zum aromatischen Carbonylrest sein muß;
g eine ganze Zahl zwischen 0 und 4 ist;
R⁸ eine zweiwertige Verbindungsgruppe ist und
Z ausgewählt ist aus der Gruppe Alkenylreste und ethylenisch ungesättigte Acylgruppen; wobei das aromatische Ketonmonomer 0,025 bis 0,5 Gew.-% des Copolymers umfaßt und der Polymerisationsgrad des Copolymers so ist, daß das Copolymer eine logarithmische Viskositätszahl von 0,15 dl/g bis 1,4 dl/g vor der Vernetzung hat.

## Revendications

1. Composition d'adhésif sensible à la pression de type acrylate, durci par rayonnement, modifié par 1 à 10 % en poids de siloxane ayant coréagi, ledit siloxane étant représenté par la formule : 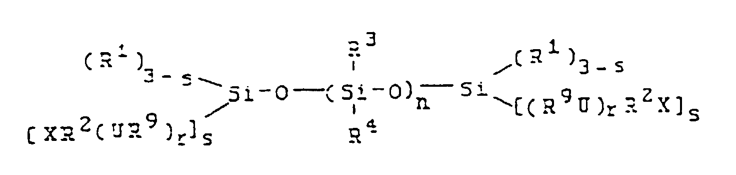 dans laquelle
R¹ représente des entités monovalentes pouvant être identiques ou différentes, choisies dans le groupe constitué par un alkyle, un alkyle substitué, un aryle, et un aryle substitué ;
R² représente des groupes de liaison divalents qui peuvent être identiques ou différents ;
R³ représente des entités monovalentes qui peuvent être indépendamment identiques ou différentes et sont choisies dans le groupe constitué par un alkyle, un alkyle substitué, un aryle, un aryle substitué, et -R²X ;
R⁴ représente des entités monovalentes qui peuvent être indépendamment identiques ou différentes et sont choisies dans le groupe constitué par un alkyle, un alkyle substitué, un aryle, un aryle substitué, et -R²X ;
X représente des entités monovalentes ayant une insaturation éthylénique qui peuvent être identiques ou différentes ;
U représente des entités divalentes qui peuvent être identiques ou différentes, comprenant un segment polyéther choisi dans le groupe constitué par le poly(oxyde d'éthylène), le poly(oxyde de propylène), le poly(oxyde de 1,2-butylène), et le poly(oxyde de tétraméthylène), dans lesquelles lesdits segments polyéthers ont des poids moléculaires moyens en nombre allant de 400 à 10 000 ;
R⁹ représente des groupes de liaison divalents pouvant être identiques ou différents ;
n est un entier de 15 à 300 ;
r est un entier de 0 à 1 ; et
s est un entier de 0 à 3 ;
dans laquelle ledit siloxane a une moyenne d'au moins deux groupes -R²X ; et
dans laquelle ladite composition d'adhésif sensible à la pression de type acrylate durci par rayonnement a une aptitude améliorée au décollage comparativement à la même composition durcie en l'absence de siloxane multifonctionnel coréactif.

2. Composition de la revendication 1, dans laquelle s = 1 ; r = 0 ;
R³ représente des entités monovalentes pouvant être identiques ou différentes, choisies dans le groupe constitué par un alkyle, un alkyle substitué, un aryle, et un aryle substitué ;
R⁴ représente des entités monovalentes pouvant être identiques ou différentes, choisies dans le groupe constitué par un alkyle, un alkyle substitué, un aryle, et un aryle substitué ;
R² est représenté par la structure 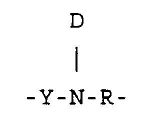
dans laquelle Y représente des groupes de liaison qui peuvent être identiques ou différents et qui servent à activer X vers une polymérisation par radicaux libres ;
D représente des entités monovalentes pouvant être identiques ou différentes choisies dans le groupe constitué par l'hydrogène, des groupes alkyles comprenant de 1 à 10 atomes de carbone, des groupes aryles et des groupes aryles substitués ; et
R représente des groupes hydrocarbonés divalents pouvant être identiques ou différents.

3. Composition de la revendication 2, dans laquelle lorsque X comprend CH₂=CH-, alors
Y comprend 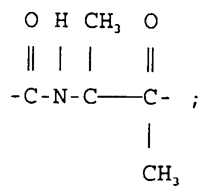 et 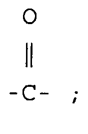
D comprend H ;
R comprend -CH₂CH₂CH₂- ; et
R¹, R³ et R⁴ comprennent chacun -CH₃,
et dans laquelle en outre
lorsque X comprend 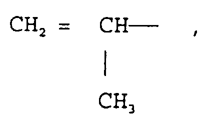 alors
Y est choisi dans le groupe constitué par 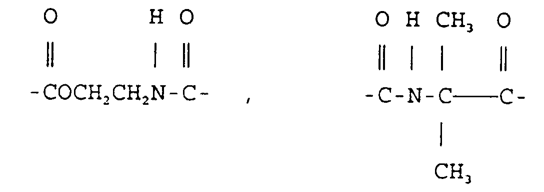 et 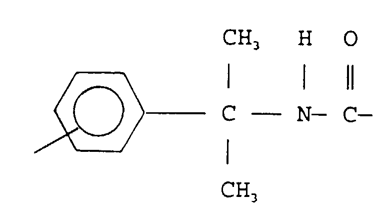
D comprend -H ;
R comprend -CH₂CH₂CH₂-; et
R¹, R³ et R⁴ comprennent chacun -CH₃.

4. Composition de la revendication 1, dans laquelle s=0 ;
R¹ représente des entités monovalentes pouvant être identiques ou différentes choisies dans le groupe constitué par un alkyle, un alkyle substitué, un aryle, et un aryle substitué ;
R³ représente des entités monovalentes pouvant être identiques ou différentes choisies dans le groupe constitué par un alkyle, un alkyle substitué, un aryle, et un aryle substitué ; et
au moins deux des entités R⁴ sont -R²X.

5. Composition de la revendication 1, dans laquelle
s = 1 ;
r = 1 ;
R¹, R³, R⁴ représentent chacun des groupes méthyles ;
U représente la structure -(CH₂CH₂O)ₘ-,
dans laquelle m est un entier de 10 à 180 ;
-R⁹- est un groupe de liaison hydrocarboné divalent
X représente la structure 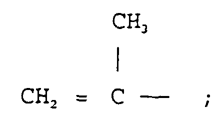 et
R² représente la structure

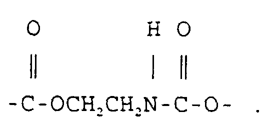

6. Procédé pour préparer la composition de la revendication 1, comprenant les étapes consistant à
(a) former un mélange homogène comprenant :
(i) 1 à 10 pour cent en poids d'un siloxane multifonctionnel coréactif représenté par la formule 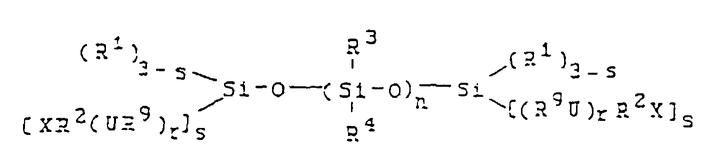 dans laquelle
R¹ représente des entités monovalentes pouvant être identiques ou différentes choisies dans le groupe constitué par un alkyle, un alkyle substitué, un aryle, et un aryle substitué ;
R² représente des groupes de liaison divalents pouvant être identiques ou différents ;
R³ représente des entités monovalentes qui peuvent être indépendamment identiques ou différentes et sont choisies dans le groupe constitué par un alkyle, un alkyle substitué, un aryle, un aryle substitué, et -R²X ;
R⁴ représente des entités monovalentes qui peuvent être indépendamment identiques ou différentes et sont choisies dans le groupe constitué par un alkyle, un alkyle substitué, un aryle, un aryle substitué, et -R²X ;
X représente des entités monovalentes ayant une insaturation éthylénique, qui peuvent être identiques ou différentes ;
U représente des entités divalentes pouvant être identiques ou différentes, comprenant un segment polyéther choisi dans le groupe constitué par le poly(oxyde d'éthylène), le poly(oxyde de propylène), le poly(oxyde de 1,2-butylène), et le poly(oxyde de tétraméthylène), dans lesquelles lesdits segments polyéthers ont des poids moléculaires moyens en nombre allant de 400 à 10 000 ;
R⁹ représente des groupes de liaison divalents pouvant être identiques ou différents ;
n est un entier de 15 à 300 ;
r est un entier de 0 à 1 ; et
s est un entier de 0 à 3 ;
dans lequel ledit siloxane a une moyenne d'au moins deux groupes -R²X ; et
(ii) 65 à 99 pour cent en poids de monomère vinylique monofonctionnel polymérisable par radicaux libres qui est capable de copolymériser avec ledit siloxane, dans lequel ledit monomère de vinyle polymérisable par radicaux libres est choisi dans le groupe constitué par l'acide acrylique, l'acide méthacrylique, des esters de l'acide acrylique, comprenant de 4 à 21 atomes de carbone, des esters de l'acide méthacrylique comprenant de 5 à 22 atomes de carbone, l'acrylamide, des acrylamides substitués, le styrène, des styrènes substitués, l'acrylonitrile, le méthacrylonitrile, la N-vinyl pyrrolidone, le N-vinyl caprolactame, le chlorure de vinylidène, des esters vinyliques d'acides carboxyliques, et leurs mélanges ; et
(iii) 0,1 à 5 pour-cent en poids d'un photoinitiateur ;
où les pourcentages en poids sont basés sur le poids total de mélange homogène ; et
(b) polymériser ledit mélange en l'exposant à un rayonnement ultraviolet de faible intensité en l'absence d'oxygène et de solvant.

7. Procédé pour préparer la composition de la revendication 1, comprenant les étapes consistant à :
(a) former un mélange homogène comprenant :
(i) 1 à 10 pour cent en poids de siloxane multifonctionnel coréactif représenté par la formule 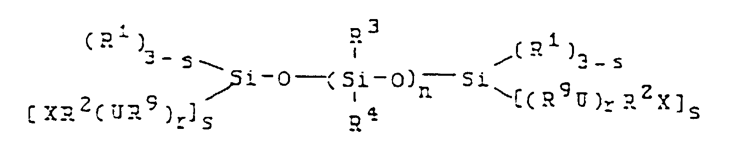 dans laquelle
R¹ représente des entités monovalentes pouvant être identiques ou différentes choisies dans le groupe constitué par un alkyle, un alkyle substitué, un aryle, et un aryle substitué ;
R² représente des groupes de liaison divalents pouvant être identiques ou différents ;
R³ représente des entités monovalentes qui peuvent être indépendamment identiques ou différentes et sont choisies dans le groupe constitué par un alkyle, un alkyle substitué, un aryle, un aryle substitué, et -R²X ;
R⁴ représente des entités monovalentes qui peuvent être indépendamment identiques ou différentes et sont choisies dans le groupe constitué par un alkyle, un alkyle substitué, un aryle, un aryle substitué, et -R²X ;
X représente des entités monovalentes ayant une insaturation éthylénique, qui peuvent être identiques ou différentes ;
U représente des entités divalentes qui peuvent être identiques ou différentes, comprenant un segment polyéther choisi dans le groupe constitué par le poly(oxyde d'éthylène), le poly(oxyde de propylène), le poly(oxyde de 1,2-butylène), et le poly(oxyde de tétraméthylène), dans lesquelles lesdits segments polyéthers ont des poids moléculaires moyens en nombre allant de 400 à 10 000 ;
R⁹ représente des groupes de liaison divalents pouvant être identiques ou différents ;
n est un entier de 15 à 300 ;
r est un entier de 0 à 1 ; et
s est un entier de 0 à 3 ;
où ledit siloxane a une moyenne d'au moins deux groupes -R²X ; et
(ii) 70 à 99 pour-cent en poids de copolymère d'acrylate constitué de monomères vinyliques monofonctionnels polymérisables par radicaux libres et de monomères de cétone aromatique monoéthyléniquement insaturée ;
dans lequel lesdits monomères vinyliques sont choisis dans le groupe constitué par l'acide acrylique, l'acide méthacrylique, les esters de l'acide acrylique comprenant de 4 à 21 atomes de carbone, les esters de l'acide méthacrylique comprenant de 5 à 22 atomes de carbone, l'acrylamide, les acrylamides substitués, le styrène, les styrènes substitués, l'acrylonitrile, le méthacrylonitrile, la N-vinyl pyrrolidone, le N-vinyl caprolactame, le chlorure de vinylidène, les esters vinyliques d'acides carboxyliques, et leurs mélanges et ledit monomère de cétone aromatique a la formule : 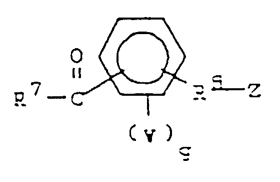 dans laquelle
R⁷ est choisi dans le groupe constitué par les groupes alkyles comprenant de 1 à 4 atomes de carbone et par le phényle, R⁷ étant facultativement substitué avec un ou plusieurs substituants choisis dans le groupe constitué par les halogènes, les groupes alcoxy, et les groupes hydroxyles, avec la condition supplémentaire que lorsque R⁷ est un phényle substitué avec un ou plusieurs groupes hydroxyles, ce ou ces groupes hydroxyles doivent être en position méta ou para par rapport au carbonyle aromatique ;
W est choisi dans le groupe constitué par les halogènes, des groupes alcoxy et hydroxyles, à condition que lorsque W est un groupe hydroxyle, W doit être situé en méta ou en para par rapport au carbonyle aromatique ;
g est un entier allant de 0 à 4 ;
R⁸ est un groupe de liaison divalent ; et
Z est choisi dans le groupe constitué par des groupes alcényles et des groupes acyles éthyléniquement insaturés, ledit monomère de cétone aromatique comprenant de 0,025 % à 0,5 % en poids dudit copolymère et le degré de polymérisation dudit copolymère étant tel que ledit copolymère a une viscosité intrinsèque allant de 0,15 dl/g à 1,4 dl/g avant réticulation ; où les pourcentages en poids dudit siloxane et dudit copolymère sont basés sur le poids total de mélange homogène ; et
(b) durcir le mélange en l'exposant à un rayonnement ultraviolet d'intensité moyenne ou élevée en l'absence de solvant.

8. Feuille souple revêtue sur au moins une partie d'au moins une surface principale, de l'adhésif de la revendication 1.

9. Composition adhésive autocollante durcissable par rayonnement comprenant :
un mélange homogène comprenant :
(i) 1 à 10 % en poids d'un siloxane représenté par la formule : 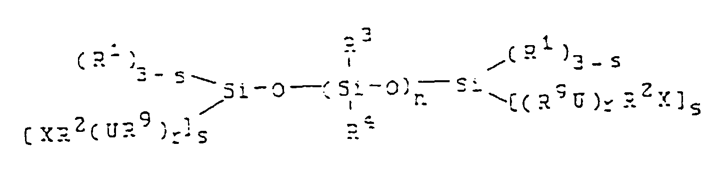 dans laquelle
R¹ représente des entités monovalentes pouvant être identiques ou différentes, choisies dans le groupe constitué par un alkyle, un alkyle substitué, un aryle, et un aryle substitué ;
R² représente des groupes de liaison divalents pouvant être identiques ou différents ;
R³ représente des entités monovalentes qui peuvent être indépendamment identiques ou différentes, et sont choisies dans le groupe constitué par un alkyle, un alkyle substitué, un aryle, un aryle substitué, et -R²X ;
R⁴ représente des entités monovalentes qui peuvent être indépendamment identiques ou différentes et sont choisies dans le groupe constitué par un alkyle, un alkyle substitué, un aryle, un aryle substitué, et -R²X ;
X représente des entités monovalentes ayant une insaturation éthylénique qui peuvent être identiques ou différentes ;
U représente des entités divalentes qui peuvent être identiques ou différentes, comprenant un segment polyéther choisi dans le groupe constitué par le poly(oxyde d'éthylène), le poly(oxyde de propylène), le poly(oxyde de 1,2-butylène), et le poly(oxyde de tétraméthylène), dans lesquelles lesdits segments polyéthers ont des poids moléculaires moyens en nombre allant de 400 à 10 000 ;
R⁹ représente des groupes de liaison divalents qui peuvent être identiques ou différents ;
n est un entier de 15 à 300 ;
r est un entier de 0 à 1 ; et
s est un entier de 0 à 3 ;
où ledit siloxane a une moyenne d'au moins deux groupes -R²X.
(ii) 65 à 99 % en poids de monomère vinylique monofonctionnel polymérisable par radicaux libres qui est capable de copolymériser avec ledit siloxane où ledit monomère vinylique polymérisable par radicaux libres est choisi dans le groupe constitué par l'acide acrylique, l'acide méthacrylique, des esters de l'acide acrylique comprenant de 4 à 21 atomes de carbone, des esters de l'acide méthacrylique comprenant de 5 à 22 atomes de carbone, l'acrylamide, des acrylamides substitués, le styrène, des styrènes substitués, l'acrylonitrile, le méthacrylonitrile, la N-vinyl pyrrolidone, le N-vinyl caprolactame, le chlorure de vinylidène, des esters vinyliques d'acides carboxyliques, et leurs mélanges ; et
(iii) 0,1 à 5 pour-cent en poids d'un photoinitiateur.

10. Composition d'adhésive sensible à la pression durcissable par rayonnement comprenant :
un mélange homogène comprenant :
(i) 1 à 10 % en poids d'un siloxane multifonctionnel coréactif, ledit siloxane étant représenté par la formule : 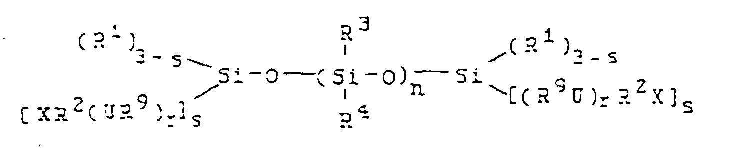 dans laquelle
R¹ représente des entités monovalentes pouvant être identiques ou différentes, choisies dans le groupe constitué par un alkyle, un alkyle substitué, un aryle, et un aryle substitué ;
R² représente des groupes de liaison divalents pouvant être identiques ou différents ;
R³ représente des entités monovalentes qui peuvent être indépendamment identiques ou différentes, et sont choisies dans le groupe constitué par un alkyle, un alkyle substitué, un aryle, un aryle substitué, et -R²x ;
R⁴ représente des entités monovalentes qui peuvent être indépendamment identiques ou différentes et sont choisies dans le groupe constitué par un alkyle, un alkyle substitué, un aryle, un aryle substitué, et -R²X ;
X représente des entités monovalentes ayant une insaturation éthylénique qui peuvent être identiques ou différentes ;
U représente des entités divalentes qui peuvent être identiques ou différentes, comprenant un segment polyéther choisi dans le groupe constitué par le poly(oxyde d'éthylène), le poly(oxyde de propylène), le poly(oxyde de 1,2-butylène), et le poly(oxyde de tétraméthylène), dans lesquelles lesdits segments polyéthers ont des poids moléculaires moyens pondérés en nombre allant de 400 à 10 000 ;
R⁹ représente des groupes de liaison divalents pouvant être identiques ou différents ;
n est un entier de 15 à 300 ;
r est un entier de 0 à 1 ; et
s est un entier de 0 à 3 ;
où ledit siloxane a une moyenne d'au moins deux groupes -R²X, et
(ii) 70 à 99 % d'un copolymère d'acrylate constitué de monomères vinyliques monofonctionnels polymérisables par radicaux libres et d'un monomère de cétone aromatique monoéthyléniquement insaturé ;
dans lequel lesdits monomères vinyliques sont choisis dans le groupe constitué par l'acide acrylique, l'acide méthacrylique, les esters de l'acide acrylique comprenant de 4 à 21 atomes de carbone, les esters de l'acide méthacrylique comprenant de 5 à 22 atomes de carbone, l'acrylamide, les acrylamides substitués, le styrène, les styrènes substitués, l'acrylonitrile, le méthacrylonitrile, la N-vinyl pyrrolidone, le N-vinyl caprolactame, le chlorure de vinylidène, les esters vinyliques d'acides carboxyliques, et leurs mélanges ; et dans lequel ledit monomère de cétone aromatique a la formule : 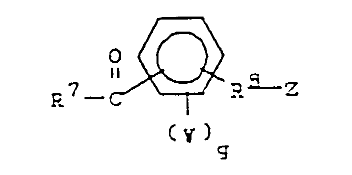 dans laquelle R⁷ est choisi dans le groupe constitué par les groupes alkyles comprenant de 1 à 4 atomes de carbone et par le phényle, à condition que R⁷ puisse être facultativement substitué avec un ou plusieurs substituants choisis dans le groupe constitué par les halogènes, les groupes alcoxy et les groupes hydroxyles, à condition en outre que lorsque R⁷ est un phényle substitué avec un ou plusieurs groupes hydroxyles, ce ou ces groupes hydroxyles doivent être en position méta ou para par rapport au carbonyle aromatique, W est choisi dans le groupe constitué par les halogènes, les groupes alcoxy et hydroxyles, à condition que lorsque W est un groupe hydroxyle, ce W doit être méta ou para par rapport au carbonyle aromatique, g est un entier de 0 à 4, R⁸ est un groupe de liaison divalent, et Z est choisi dans le groupe constitué par les groupes alkényle et les groupes acyles éthyléniquement insaturés, ledit monomère de cétone aromatique comprenant de 0,025 pour-cent à 0,5 pour-cent en poids dudit copolymère et le degré de polymérisation dudit copolymère étant tel que ledit copolymère a une viscosité intrinsèque de 0,15 dl/g à 1,4 dl/g avant réticulation.
